# EUROPEAN PATENT SPECIFICATION

(11) **EP 2 527 796 B1**
(45) Date of publication and mention of the grant of the patent: **03.04.2019**
(21) Application number: 12169565.4
(22) Date of filing: 25.05.2012
(51) Int. Cl.: G01D 5/241

(54) **Capacitive rotary encoder and method for sensing a rotation angle**
Kapazitativer Drehcodierer und Verfahren zum Messen eines Drehwinkels
Codeur rotatif capacitif et procédé de détection d'un angle de rotation

(30) Priority: 27.05.2011 CN 201110141369
(43) Date of publication of application: 28.11.2012
(73) Proprietor: Siemens Aktiengesellschaft, 80333 München (DE)
(72) Inventor: Lin, Yan Ling, 200090 Shanghai (CN); Yang, Yi Rong, 200129 Shanghai (CN); Du, Zhao Hui, 200129 Shanghai (CN)
(74) Representative: Isarpatent

(56) References cited:
- WO-A1-2011/018497
- US-A- 4 429 307
- US-A1- 2010 148 802

## Description

The present invention relates to the capacitive encoder technology, and more particularly to a capacitive rotary encoder and a method for sensing a rotation angle.

The rotary encoder is widely applied in various fields, for example, speed and position control systems for a motor. The rotary encoder is a device for measuring angles and rotational speeds and includes a stator and a rotator. The rotator is connected to an object to be measured, the rotation of the object to be measured driving the rotator to rotate. The rotary encoder can convert mechanical quantities such as an angular displacement and an angular speed of the rotator into electric signals for output.

Currently, an optical rotary encoder is widely used for speed and position feedback. However, the optical encoder is not durable enough in the application to motors. In harsh environments of frequent mechanical impacts or vibrations or a high-temperature environment, the photoelectric code disc in the encoder is easily affected by ambient factors and hence damaged. Different from an optical encoder, a magnetic encoder such as a transformer has a certain mechanical strength. However, the magnetic encoder cannot provide a sufficiently high resolution. Also, both the optical encoder and the magnetic encoder are relatively expensive and are usually used in high-end application scenarios only.

Compared with the optical encoder and the magnetic encoder, the capacitive encoder has some essential advantages. The capacitive encoder has both high precision and robustness. The basic detection of the capacitive encoder occurs around the area of the entire encoder board, while the optical encoder has to focus the light beam at a certain point on the optical disc. Therefore, the susceptibility of the capacitive rotary encoder to the mechanical misadjustment of the rotator relative to the shaft is far lower than that of the optical encoder.

The existing capacitive rotary encoder usually includes at least two stators and one rotator, one of the two stators serves as a transmitter, one serves as a receiver, and the signal received by the receiver is changed through the rotation of the rotator between the two stators. Such a capacitive rotary encoder has a relatively complicated structure and a large volume.

As a capacitive rotary encoder in the prior art has a complicated structure and a large volume, the embodiments of the present invention provide a capacitive rotary encoder, which has a simple structure and a small volume.

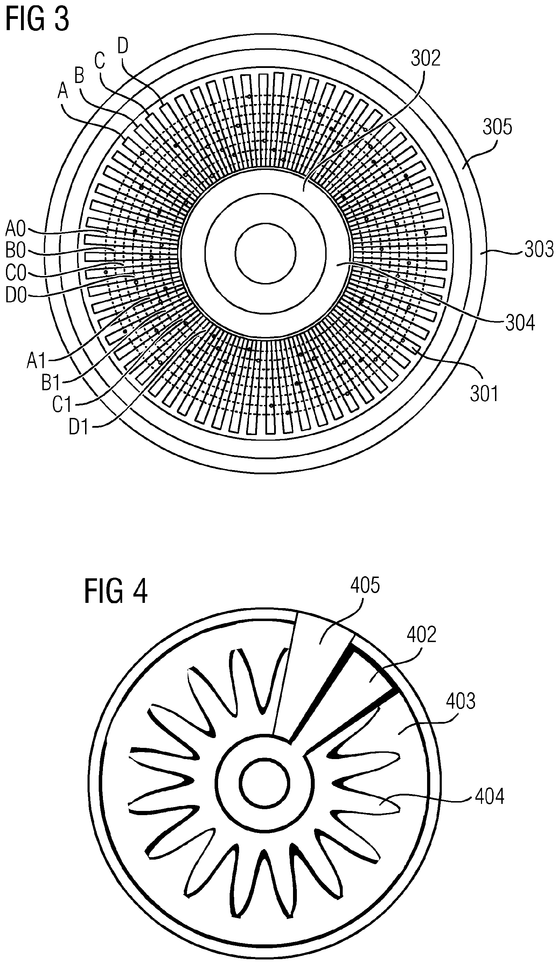

The prior art document US 2010/0148802 A1 discloses a capacitance-type encode comprising a stator, a movable element, an excitation device and a signal processing device to obtain position data with low power-consumption. In Fig. 3 and paragraphs [0047] to [0050], an embodiment is described where the surface of the moveable element with the connection electrodes is arranged to confront the excitation electrodes of the stator with a predetermined gap in between. The outputs of the excitation means are connected to respective supply terminals on the stator for the respective phases. A sequencer outputs signal pulse voltages at predetermined intervals. A detection signal output terminal of the stator and the signal processing section are electrically connected. The signal is then processed by a signal processing station. The detection of the rotational position (angle) can be determined by groups of four successive excitation electrodes. In one cycle, the arrangement phase of the four excitation electrodes in one group are phase shifted by 90° successively to each other.

The prior art document US 4 429 307 discloses in an embodiment a rotary capacitive encode comprising a moving and stationary discs. The moving disc is rotatably and concentrically mounted with respect the stationary disc and is spaced a small distance therefrom. The moving disks include conductive areas separated by a gap. The stationary disc includes transmitter elements and receiver bars that are connected to the outputs. The outputs are voltages which are proportional to the sine and cosine of a multiple of the angel of the moving disc with respect to the stationary disc which multiple is by the number of cycles of sine wave on the moving disc. In here, the provision of groups of receiver bars insures that the output will be accurate despite any relative tilt between the discs.

The embodiments of the present invention further provide a method for sensing a rotation angle using the capacitive rotary encoder, which can utilize the simple encoder structure for measuring a rotation angle.

An embodiment of the present invention provides a capacitive rotary encoder, which includes a static plate and a rotation plate, wherein:
the static plate includes a transmitting area, a first receiving area, and a second receiving area, the first receiving area and the second receiving area are conductive areas respectively; the transmitting area, the first receiving area, and the second receiving area are electrically isolated from each other, the transmitting area includes multiple elongate electrodes electrically isolated from each other, the electrodes are arranged side by side with their longitudinal axes in radial direction with respect to the rotation axis of the rotation plate and every N successive electrodes are assigned to one group, excitation electric signals of different electrodes in each group are phase shifted with respect to one another, and excitation electric signals applied to the Mth electrodes in all the groups of electrodes have the same phase, N being a natural number, and M being a positive integer not greater than N;
the rotation plate is capable of rotating about a rotation shaft and includes an insulated area, a first reflecting area, and a second reflecting area, wherein the first reflecting area is located at a periphery of the second reflecting area and is concentric with the second reflecting area, the first reflecting area and the second reflecting area are isolated by the insulated area, multiple bulges towards the first reflecting area are provided at the edge of the second reflecting area, multiple bulges towards the second reflecting area are provided at the edge of the first reflecting area, and the multiple bulges of the first reflecting area and the multiple bulges of the second reflecting area are arranged in an alternating manner;
the first reflecting area and the second reflecting area are both conductive areas, the first reflecting area is capacitively coupled to the transmitting area and the first receiving area, respectively, the second reflecting area is capacitively coupled to the transmitting area and the second receiving area, respectively;
the first receiving area in use receives an electric signal reflected by the first reflecting area and output the electric signal; and
the second receiving area in use receives an electric signal reflected by the second reflecting area and output the electric signal.

According to an embodiment of the present invention, the excitation source (50) is adapted to generate periodic excitation electric signals and to apply these signals to the electrodes, wherein the excitation electric signals applied to different electrodes (101) in each group are electric signals in mutual quadrature.

According to an embodiment of the present invention, the multiple bulges at the edge of the second reflecting area have the same shape and are distributed at equal intervals; the multiple bulges at the edge of the first reflecting area have the same shape and are distributed at equal intervals.

According to an embodiment of the present invention, the transmitting area, the first receiving area, and the second receiving area are concentric circles, the first receiving area and the second receiving area are located at two sides of the transmitting area, respectively, and the first receiving area and the second receiving area have the same surface area.

According to an embodiment of the present invention, the electrodes are bar shaped and are arranged at regular angular intervals, two long sides of each electrode are in a radial direction, respectively; a sector-shaped area covered by one bulge in the second reflecting area has the same angle as that of a sector-shaped area covered by a group of electrodes in the transmitting area.

According to an embodiment of the present invention, the bulges at the edges of both the first reflecting area and the second reflecting area are cosine wave shapes in polar coordinates.

According to an embodiment of the present invention, the rotation plate further includes at least one sector-shaped conductive area, the sector-shaped conductive areas are electrically isolated from each other, and the sector-shaped conductive areas are electrically isolated from the first reflecting area and the second reflecting area, respectively;
each different excitation electric signal is loaded on at least two signal wires, respectively, the at least two signal wires denoting different codes, respectively;
each electrode is connected to one of the at least two signal wires corresponding to a corresponding excitation electric signal according to preset codes;
the static plate further includes at least one third receiving area, which is electrically isolated from the transmitting area, the first receiving area, and the second receiving area respectively, and each third receiving area in use receives an electric signal reflected by the sector-shaped conductive area and output the electric signal.

According to an embodiment of the present invention, the static plate is implemented as a printed circuit board; when the printed circuit board includes at least two layers; the static plate is printed on one layer in the printed circuit board, and at least one signal wire is printed on the other layer; when the printed circuit board includes one layer, the static plate is printed on one side of the printed circuit board and at least one signal wire is printed on the other side;
each excitation electric signal is loaded on the signal wire, and the electrode is connected to a corresponding signal wire through a via.

According to an embodiment of the present invention, the rotary encoder further includes a processing circuit adapted to perform differential amplification, synchronous demodulation, and low-pass filtering on the signals output by the first receiving area and the second receiving area, and output a sine wave signal and a cosine wave signal to calculate an angle that the rotation plate rotates relative to the static plate.

According to an embodiment of the present invention, the rotary encoder further includes: a signal processing module, adapted to determine a code string according to the signals output by the first receiving area, the second receiving area, and the at least one third receiving area to determine the position of the sector-shaped conductive area relative to the static plate.

According to an embodiment of the present invention, the signal processing module is specifically adapted to: determine a code corresponding to each electrode coupled to each sector-shaped conductive area according to the signal output by the at least one third receiving area; remove a code corresponding to an electrode incompletely coupled to the sector-shaped conductive area from the determined code of each third receiving area according to the signals output by the first receiving area and the second receiving area; and connect the remaining codes into the code string.

According to an embodiment of the present invention, the rotary encoder further includes:
a control unit, adapted to excite all signal wires successively when the rotation plate is still; and excite all signal wires at the same time when the rotation plate rotates.

According to an embodiment of the present invention, the at least one third receiving area, the transmitting area, the first receiving area, and the second receiving area are concentric circles; the rotation plate further includes at least one concentric circle conductive area, each concentric circle conductive area being connected to a different sector-shaped conductive area; the at least one third receiving area is capacitively coupled to a concentric circle conductive area connected to a corresponding sector-shaped area.

According to an embodiment of the present invention, each different electric signal corresponds to two signal wires, respectively; when the total number of electrodes is P, P being a Qth power of 2, and 4 different electric signals are used, the number of sector-shaped conductive areas is an integer rounded up from the quotient of Q divided by 3, and the number of digits of the code string is Q.

According to an embodiment of the present invention, the preset code is an R-digit binary code string and is generated according to binary codes of the integers from 0 to R-1; each different electric signal exciting at least two signal wires, respectively, the at least two signal wires denoting different codes, respectively, and each electrode being connected to one of the at least two signal wires corresponding to a corresponding electric signal according to preset codes include that: 4 electric signals in mutual quadrature excite 8 signal wires, wherein two signal wires connected to each electric signal denote 0 and 1, respectively; each electrode corresponds to a digit of code in the R-digit binary code string based on the arrangement order of the electrodes on the static plate, and the electrode is connected to one of the two signal wires connected to the electric signal corresponding to the electrode according to the code corresponding to each electrode.

An embodiment of the present invention provides a method for sensing a rotation angle using the capacitive rotary encoder, which includes:
exciting electrodes on the static plate at the same time using electric signals that are phase shifted with respect to one another, wherein in each group of electrodes different electrodes are excited by electric signals that are phase shifted with respect to one another;
having the rotation plate rotate, driven by an object to be measured;
receiving a first electric signal and a second electric signal, the first electric signal being an electric signal reflected by a first reflecting area and sensed by a first receiving area, and the second electric signal being an electric signal reflected by a second reflecting area and sensed by a second receiving area;
performing differential amplification, synchronous demodulation, and low-pass filtering on the first electric signal and the second electric signal, respectively, and outputting a sine wave signal and a cosine wave signal; and calculating an angle that the rotation plate rotates relative to the static plate according to the sine wave signal and the cosine wave signal;
wherein the sine wave signal and the cosine wave signal are functions of the angle, respectively.

An embodiment of the present invention provides a method for sensing a rotation angle using the capacitive rotary encoder with a sector-shaped conductive area, which includes:
when the rotation plate is still,
exciting U signal wires corresponding to electric signals having the same phase, successively,
during each excitation, receiving an electric signal reflected by a corresponding sector-shaped conductive area and
sensed by each third receiving area, and obtaining U sensed values corresponding to each sector-shaped conductive area; when the rotation plate rotates,
exciting all the signal wires at the same time,
receiving a first electric signal reflected by the first reflecting area and sensed by the first receiving area and a second electric signal reflected by the second reflecting area and sensed by the second receiving area;
performing differential amplification, synchronous demodulation, and low-pass filtering on the first electric signal and the second electric signal, respectively, outputting a sine wave signal and a cosine wave signal, and calculating an angle that the rotation plate rotates relative to the static plate; and
removing a sensed value from U sensed values corresponding to each of the sector-shaped conductive areas according to the calculated angle, calculating a code using the remaining sensed values, and determining the absolute position of the rotation plate relative to the static plate using the obtained code.

As can be seen from the technical solutions, in the capacitive rotary encoder and the method for sensing a rotation angle using the capacitive rotary encoder provided in an embodiment of the present invention, only one rotation plate and one static plate are adopted to sense a rotation angle, so the structure is simple and the volume is small.

Furthermore, in the capacitive rotary encoder and the method for sensing a rotation angle using the capacitive rotary encoder provided in another embodiment of the present invention, digital coding is further performed on the electrodes on the static plate by connecting the electrodes with excitation signals, so as to implement a mixed capacitive rotary encoder having both the incremental measurement capability and the absolute measurement capability, and such a capacitive rotary encoder still only needs one static plate, one rotation plate, and the same group of electrodes, so that the structure is simple and the volume is small.

### Brief description of the drawings:

- FIG. 1: is a schematic view of a static plate of a capacitive rotary encoder according to a first embodiment of the present invention;
- FIG. 2: is a schematic view of a rotation plate of a capacitive rotary encoder according to the first embodiment of the present invention;
- FIG. 3: is a schematic view of a static plate of a capacitive rotary encoder provided in a second embodiment of the present invention;
- FIG. 4: is a schematic view of a rotation plate of a capacitive rotary encoder provided in the second embodiment of the present invention;
- FIG. 5: shows the operating principles of a capacitive rotary encoder according to an embodiment of the present invention;
- FIG. 6: shows examples of an excitation pulse signal and a received signal according to an embodiment of the present invention;
- FIG. 7: is a schematic view of a static plate of a capacitive rotary encoder provided in a third embodiment of the present invention; and
- FIG. 8: is a schematic view of a rotation plate of a capacitive rotary encoder provided in the third embodiment of the present invention.

### Detailed description of the invention:

To make the objectives, technical solutions, and advantages of the embodiments of the present invention more comprehensible, the embodiments of the present invention are further illustrated in detail below with reference to the accompanying drawings and the embodiments.

The capacitive rotary encoder that adopts a differential structure to implement incremental angular measurement in an embodiment of the present invention solves the problem in the prior art that a rotary encoder has a large volume and a complicated structure.

A capacitive rotary encoder provided in an embodiment of the present invention includes two electrodes: one static plate (also referred to as a stator) and one rotation plate (also referred to as a rotator).

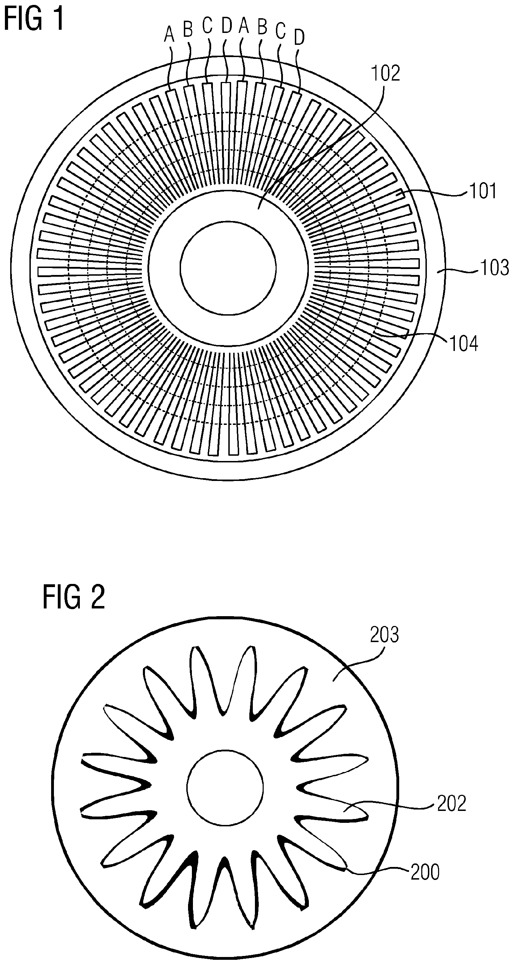

The static plate, taking FIG. 1 as an example, includes a transmitting area, a first receiving area 103, and a second receiving area 102. The transmitting area includes several electrodes 101 arranged side by side with their longitudinal axes in radial direction with respect to the rotation axis of the rotation plate, and every W successive electrodes are assigned to one group (W is an integer greater than 1). The excitation source (50) is adapted to generate periodic excitation electric signals and to apply these signals to the electrodes (101), wherein the excitation electric signals applied to different electrodes (101) in each group are phase shifted with respect to one another, and electrodes at corresponding positions in the groups are excited by the same electric signal, that is, the excitation electric signals of the Yth electrode in the clockwise direction in the Pth group and the Yth electrode in the clockwise direction in the Qth group have the same phase.

The rotation plate, taking FIG. 2 as an example, is capable of rotating about a rotation shaft. The rotation plate includes an insulated area 200, a first reflecting area 203, and a second reflecting area 202. The first reflecting area 203 is located at a periphery of the second reflecting area 202 and is concentric with the second reflecting area 202, the first reflecting area 203 and the second reflecting area 202 are isolated by the insulated area 200, multiple bulges towards the first reflecting area are provided at the edge of the second reflecting area 202, multiple bulges towards the second reflecting area 202 are provided at the edge of the first reflecting area 203, and the multiple bulges of the first reflecting area 203 and the multiple bulges of the second reflecting area 202 are arranged in an alternating manner. The shape of the bulges as shown in the figure is a cosine curve or sine curve in polar coordinates. However, persons skilled in the art shall understand that the shape figure of the bulges may also be other shape, for example, a tooth shape or a sawtooth shape. According to an embodiment of the present invention, the bulges of the first reflecting area edge and the bulges of the second reflecting area edge have the same shape and are distributed at equal intervals, so that the reflected signal of the first reflecting area and the reflected signal of the second reflecting area received by the static plate have desirable correlation for ease of subsequent calculation of rotation angle. The first reflecting area and the second reflecting area are both conductive areas, the first reflecting area 203 is capacitively coupled to the transmitting area and the first receiving area 103 on the static plate, respectively, and the second reflecting area 202 is capacitively coupled to the transmitting area and the second receiving area 102 on the static plate, respectively.

The first receiving area in use receives an electric signal reflected by the first reflecting area and output the electric signal; and the second receiving area in use receives an electric signal reflected by the second reflecting area and output the electric signal.

In this embodiment, multiple bulges towards the first reflecting area are provided at the edge of the second reflecting area, multiple bulges towards the second reflecting area are provided at the edge of the first reflecting area, and the multiple bulges of the first reflecting area and the multiple bulges of the second reflecting area are arranged in an alternating manner, that is, form a differential structure. Such a differential structure enables the signals reflected by the two reflecting areas to be differential signals with respect to each other, and both are functions of the rotation angle of the rotation plate. For ease of understanding, it can be simply assumed that the two signals have the forms of and, where A and B are quantities related to signal amplitude, A and B might have the same value, and is the rotation angle (it should be noted that this is only for ease of understanding, and the actual signals are related to the shapes of the first reflecting area and the second reflecting area and the form of the excitation signal, and are more complicated than this). A corresponding signal processing method may be performed on the two signals to obtain one sine signal and one cosine signal, and according to the two signals, the incremental angle of the rotation of the rotation plate can be obtained.

As can be seen from the example above, the rotary encoder according to the embodiment of the present invention only has two electrodes, that is, the static plate and the rotation plate. The movement of the rotation plate with the rotation of the shaft causes changes to the coupling capacitance between the two complementary reflecting areas on the rotation plate and the static plate, and the angle of the relative rotation between the rotation plate and the static plate can be sensed by measuring the changes in the capacitance.

The electrodes can be formed of a conductive metal bar or a metal foil and can be periodically arranged following a certain rule according to the shapes and sizes thereof. For example, electrodes having the same shape and size can be arranged side by side with their longitudinal axes in radial direction with respect to the rotation axis of the rotation plate at the same angle or same interval. The electrodes can be bars, which may also be referred to as bar electrodes, and the two long sides thereof may be parallel to each other, or in a radial direction each respectively. The W electrodes in each group can be excited by W electric signals that are phase shifted with respect to one another. According to the embodiment of the present invention, the excitation source (50) is adapted to generate periodic excitation electric signals and to apply these signals to the electrodes, wherein the excitation electric signals applied to different electrodes (101) in each group are electric signals in mutual quadrature. For example, a four-phase quadrature alternating current voltage source excites every four successive electrodes. By adopting the quadrature electric signals to excite the electrodes, the interferences among the transmitted signals of the electrodes are relatively small.

The first receiving area, the second receiving area, and the transmitting area formed of electrodes may be concentric circles or parts of circles, the relative positions of which can be designed based on demands. For example, the first receiving area and the second receiving area may be located at the two sides of the transmitting area, respectively. In one embodiment, the first receiving area and the second receiving area have the same surface area, so that the signals received by the first receiving area and the second receiving area are differential signals having the same amplitude for ease of subsequent processing.

In one embodiment of the present invention, the bulges of the first reflecting area and the bulges of the second reflecting area may have the same shape and may also have different shapes, for example, may be a sine wave shape, sawtooth-shape, etc. According to the embodiment of the present invention, the multiple bulges at the edge of the second reflecting area have the same shape and are distributed at equal intervals. The multiple bulges at the edge of the first reflecting area have the same shape and are distributed at equal intervals. The sector-shaped area covered by the pattern of one bulge of the second reflecting area has the same angle as that of the sector-shaped area covered by a group of electrodes. Therefore, during the rotation of the rotation plate, the reflected signal received by the receiving area of the static plate changes evenly with the period of the angle passed through when the rotation plate rotates through the sector-shaped area covered by one bulge of the second reflecting area.

One advantage of the rotary encoder of the present invention is that both the static plate and the rotation plate may be fabricated through the printed circuit board technology which is already very mature at present; the plate base is fabricated using an insulation substrate material, and the electrode and the excitation signal wire may be formed using the metal deposition or printing method, etc. When the printed circuit board includes at least two layers, the static plate can be printed on one layer and several signal wires are printed on one layer different from that of the static plate. When the printed circuit board only has one layer, the static plate can be printed on one side, and the signal wires are printed on the other side. Each excitation electric signal can be loaded on at least one signal wire, and the electrode can be connected to a corresponding signal wire through a via. Therefore, is is only necessary to print several signal wires on the layer different from that of the static plate in the printed circuit board, and the connection relationship between the electrode and the excitation signal thereof is relatively simple. Therefore, the rotary encoder according to the embodiment of the present invention can be easily fabricated and is suitable for mass production.

The rotary encoder may further include a processing circuit, used to perform preliminary simple processing, for example, differential amplification, synchronous demodulation and low-pass filtering, on the signals output by the first receiving area and the second receiving area, and output one sine wave signal and one cosine wave signal to calculate an angle that the rotation plate rotates relative to the static plate. The processing circuit can also be directly formed on one layer in the printed circuit board through the printed circuit board process, and the fabrication is also not complicated.

Set forth above are the principles and several examples of the rotary encoder capable of incremental measurement of rotation angles provided in the present invention, and such a rotary encoder is illustrated below by taking specific examples.

### First Embodiment

FIG. 1 is a schematic view of a static plate of a capacitive rotary encoder according to a first embodiment of the present invention. The static plate is used as a transmitter and a receiver of the encoder.

As shown in FIG. 1, the same conductive electrodes 101 are arranged on the static plate. Every four successive electrodes form one space period. As shown in the figure, every four electrodes A, B, C, and D form one space period. The four electrodes in each period are excited by four different signals, respectively. In this embodiment, four wires 104 on one side (when the printed circuit board only has one layer) or on one layer (when the printed circuit board has multiple layers) different from that of the static plate correspond to the four different excitation electric signals, respectively. The signal generator provides four alternating current excitations that are phase shifted with respect to one another, which are loaded on the four wires 104, respectively. The phase differences between the four alternating current excitation signals are 90 degrees. The reflected signal receiving areas are provided at the two sides of the electrode 101 serving as the transmitter, and are the two conductive circular patterns on the static plate in the figure, namely, the inner circle 102 and the outer circle 103, used as receivers for the reflected signal. The receiving area 102 and the receiving area 103 have the same surface area.

FIG. 2 is a schematic view of a rotation plate of a capacitive rotary encoder according to the first embodiment of the present invention. The rotation plate is used as a reflector of the encoder.

As shown in FIG. 2, the reflecting areas are conductive areas 202 and 203, which are isolated by the insulated area 200. The adjacent edges of the conductive areas 202 and 203 have multiple bulges with a sine wave shape, and these bulges have the same shape, are distributed at equal intervals, and are arranged in an alternating manner, that is, form a differential structure. The insulated area 200 is the black portion in the figure, and is shown more clearly with larger thickness. During practical implementation, the insulated area 200 may be only one very narrow linear insulation material, as long as the conductive areas 202 and 203 are electrically isolated from each other. In some embodiments, the thickness of the insulated area 200 is kept fixed. In some embodiments, the radial width of the insulated area 200 is kept fixed, so that the bulges at the edges of the conductive areas 202 and 203 have the same shape.

The embodiments of the rotary encoder for incremental measurement are provided above. Sometimes, the measurement of an incremental angle alone is not enough, and the measurement of an absolute angle further needs to be provided. The embodiments of the present invention further provide a mixed rotary encoder capable of measuring an incremental angle and also capable of measuring an absolute angle, and the structures and principles thereof are as follows.

The mixed rotary encoder provided in an embodiment of the present invention only requires some additions and modifications on the basis of the incremental rotary encoder. The added structures mainly include the following aspects.
1. Code the electrodes, and represent the code through a connection between an electrode and an excitation signal.

Specifically, the electrodes on the static plate are coded, and the code of an electrode is determined through the connection thereof. In such a manner, the position of an electrode on the static plate can be calculated through the code of the electrode and the code of the adjacent electrode thereof.

The electrode and the excitation signal are connected in the following manner: each different electric signal excites at least two signal wires, respectively, the at least two signal wires denote different codes, respectively, for example, denote 0 and 1, respectively. According to preset codes, each electrode is connected to one of at least two signal wires corresponding to a corresponding electric signal. For example, when the first electrode in the clockwise direction in each group is excited by an electric signal A, the first electrode in the clockwise direction in the Pth group can be connected to a signal wire with the code of 0 corresponding to the electric signal A, the first electrode in the clockwise direction in the Qth group is connected to a signal wire with the code of 1 corresponding to the electric signal A, and so on.

When the total number of electrodes is G, the coding of G electrodes is to find one G-digit code string as the preset codes. The code string is one code string without a head or a tail. When each electric signal corresponds to F signal wires, that is, each electrode has F optional connection modes, and, the position of each electrode can be denoted by the codes of L electrodes. For example, when 64 electrodes are disposed on the static plate, and each electric signal corresponds to two signal wires, one can choose to connect each electrode to one of the two signal wires corresponding to an excitation signal corresponding to the electrode, which is equivalent to coding each electrode code as 0 or 1, and the 64 positions corresponding to the 64 electrodes can be denoted by the codes of 6 electrodes.
2. Add at least one sector-shaped conductive area on the rotation plate.

After the electrodes on the static plate are coded, corresponding reflectors need to be disposed on the rotation plate. In addition to the first reflecting area and the second reflecting area, one or more sector-shaped conductive areas can be disposed on the rotation plate to reflect the transmitted signals of the electrodes. The sector-shaped conductive areas are electrically isolated from each other, and the sector-shaped conductive areas are also electrically isolated from the first reflecting area and the second reflecting area. Specifically, when the position of each electrode on the static plate needs to be determined by an L-digit code, the sector-shaped conductive area should at least reflect the transmitted signals of L electrodes, so as to determine an absolute angle that the rotation plate rotates according to the received code signals of the multiple elongate electrodes, and at this time, by combining the codes of every L electrodes, the position of one electrode on the static plate can be determined.

As the angle of the rotation plate relative to the static plate is arbitrary, the edge of a sector-shaped conductive area might coincide with an electrode, so that the electrode cannot be completely covered, and the signal of the electrode reflected by the sector-shaped conductive area is relatively weak, which affects the accuracy of judgment. Therefore, the signals corresponding to electrodes incompletely coupled to the sector-shaped conductive area should be removed from the signals reflected by the sector-shaped conductive areas, and the number of remaining electrodes completely coupled to the sector-shaped conductive areas should be greater than or equal to L, so as to determine an absolute angle.

For the positions of incompletely coupled electrodes, the signals sensed in the phase of measurement of an incremental angle can be used to judge which electrodes are not completely covered by the sector-shaped conductive area, and then the codes corresponding to the electrodes can be removed from the obtained codes of all the electrodes. For example, W codes corresponding to W electrodes covered by each sector-shaped conductive area can be obtained according to the signal reflected by each sector-shaped conductive area; a digit of code, that is, the code corresponding to the electrode that is not completely covered by the sector-shaped conductive area, is removed from every W codes according to the signals output by the first receiving area and the second receiving area; and finally, the remaining codes are connected into one code string for determining the angle of absolute rotation that the rotation plate rotates relative to the static plate.
3. The static plate further needs to include at least one third receiving area, which is capacitively coupled to the at least one sector-shaped conductive area, respectively, and used to receive an electric signal reflected by the sector-shaped conductive area coupled to the at least one third receiving area.

At this time, the signals output by the first receiving area and the second receiving area are still used to measure an incremental angle, while the signal output by the third receiving area is used to measure an absolute angle. During the measurement of the absolute angle, one code string needs to be determined according to the signals output by the first receiving area, the second receiving area, and the third receiving area, and the absolute angle denoted by the code string is determined according to the presetting.

The third receiving area can be a circle concentric with the transmitting area, the first receiving area, and the second receiving area. Each sector-shaped conductive area can also be connected to at least one concentric circle conductive area on the rotation plate, respectively, and the corresponding third receiving area is capacitively coupled to the concentric circle conductive area connected to the sector-shaped conductive area, so that the third receiving area can receive a strong signal.
4. The rotary encoder may further include a control unit, adapted to excite the signal wires successively when the rotation plate is still, and excite all signal wires at the same time when the rotation plate rotates, and receive an incremental angle measurement signal, so that the sector-shaped conductive area can be conveniently used to sense the code corresponding to each electrode covered by the sector-shaped conductive area.
5. The rotary encoder may further include a signal processing module, adapted to determine one code string according to signals output by the first receiving area, the second receiving area, and the at least one third receiving area. Specifically, the signal processing module may determine a code corresponding to each electrode coupled to each sector-shaped conductive area according to the signal output by the at least one third receiving area; remove a digit of code corresponding to an electrode incompletely coupled to the sector-shaped conductive area from the code determined by each third receiving area according to the signals output by the first receiving area and the second receiving area; and connect the remaining codes into the code string. The signal processing module may further find, according to the obtained code string, an absolute angle value corresponding to the code string.

The control unit and the signal processing module may be modules independent of the rotation plate and the static plate, and may also be disposed on the static plate or rotation plate.

The capacitive rotary encoder according to an embodiment of the present invention may further include a signal generator, used to generate an excitation signal.

According to the principles above, the rotary encoder capable of both incremental measurement and absolute measurement can be designed according to specific demands.

For example, in the capacitive rotary encoder used to measure an absolute angle in the embodiment of the present invention, the rotation plate further includes at least one sector-shaped conductive area, the sector-shaped conductive areas are electrically isolated from each other, and the sector-shaped conductive areas are electrically isolated from the first reflecting area and the second reflecting area, respectively;
each different excitation electric signal is loaded on at least two signal wires, respectively, and the at least two signal wires denote different codes, respectively;
each electrode is connected to one of the at least two signal wires corresponding to a corresponding excitation electric signal according to preset codes;
the static plate further includes at least one third receiving area, which is electrically isolated from the transmitting area, the first receiving area, and the second receiving area, respectively, and each third receiving area in use receives an electric signal reflected by one sector-shaped conductive area and output the electric signal.

To make the technical solutions of the present invention more comprehensible, the specific implementations of the present invention are illustrated by taking the following examples.

### Concerning the disposition of sector-shaped conductive areas:

In Example 1, one sector-shaped conductive area is adopted for sensing an absolute angle. When the position of each electrode on the static plate needs to be determined by an L-digit code, the sector-shaped conductive area on the rotation plate should cover at least L+1 successive electrodes, that is, be capacitively coupled to at least L+1 successive electrodes. At this time, to make the received signal clear and have low interference, during the measurement of an absolute angle, optimally all the electrodes covered by the sector-shaped conductive area should be excited one by one. Assuming that the number of electrodes in each group is W, when W is greater than or equal to L+1, the electrodes in the group are all excited by different signals, so that the electrodes can be coded and excited in the above manner; when W is smaller than L+1, that is, the sector-shaped conductive area covers two or more adjacent groups, electrodes in different groups might be connected to the same signal wire so that interference occurs between the electrodes, and in this case, all that is required is to connect the adjacent groups to different signal wires. For example, each different electric signal excites two groups of signal wires, respectively, and each group of signal wires includes at least two signal wires denoting different codes, and corresponding electrodes in adjacent groups are connected to the two groups of signal wires, respectively. Therefore, when the signal wires are excited one by one, the situation where more than one of the L+1 electrodes covered by the sector-shaped conductive area are excited at the same time does not occur.

In Example 2, multiple sector-shaped conductive areas are adopted for sensing an absolute angle. In the above example, when L is large, the same excitation signal might need to correspond to multiple groups of signal wires, so that the total number of signal wires corresponding to the excitation signals is large, and the time spent exciting the signal wires one by one is long, and the structure of the excitation circuit becomes complicated. At this time, multiple sector-shaped conductive areas can be adopted to acquire the desired L-digit code, that is, each sector-shaped conductive area only covers a few electrodes. As the sector-shaped conductive areas are electrically isolated from each other, electrodes covered by different sector-shaped conductive areas may be excited at the same time, so as to save the time required for detecting the reflected signals. Similarly, each sector-shaped conductive area might be incompletely coupled to an electrode, so one of the signals reflected by each sector-shaped conductive area should be a redundant signal and correspond to an electrode that is not completely covered by the sector-shaped conductive area, and thus should be deleted from the received signals. In the above example, if three sector-shaped conductive areas are adopted to acquire a desired L-digit code, the number of electrodes covered by each sector-shaped conductive area should be at least (L/3)+1. The positions of the multiple sector-shaped conductive areas may be arbitrarily disposed as permitted by the electrode code. For example, two sector-shaped conductive areas may be separated by the distance of two groups of electrodes, as long as at this time the codes of all electrodes satisfy that: the codes of L electrodes taken from the positions separated by two groups of electrodes are all unique; and the L-digit code taken out cannot be repetitive.

When each sector-shaped conductive area covers a group of electrodes, the number of electrodes in each group is W, and an L-digit code is needed to determine the absolute position of an electrode, the number of sector-shaped conductive areas that need to be disposed on the rotation plate is T, where , in which the symbol denotes rounding up. For example, when the total number of electrodes is M, M is an Nth power of 2, and 4 electric signals that are phase shifted with respect to one another are used to excite 4 electrodes in each group, the number of sector-shaped conductive areas that need to be disposed on the rotation plate is an integer rounded up from the quotient of N divided by 3.

### Concerning the preset code:

When the total number of electrodes is G and one sector-shaped conductive area is adopted, the preset codes can be obtained using the following method: list F-base codes of all the numbers 0 to G-1, and then connect the G codes in a certain order. The order is: the first digits of the next code are the same as the last digits of the previous code. The same codes in the two codes are then overlapped to be combined into one digit code, and the next code is used as the previous code to continue to perform the above process after selecting one code from the remaining codes till one G-digit code string is connected, and when the G-digit code is connected tail to head, each random continuous L-digit code taken out is an F-base code of a different number from 0 to G-1.

When the total number of electrodes is G, two sector-shaped conductive areas separated by H electrodes are adopted, and each sector-shaped conductive area covers W+1 electrodes, the preset code can be obtained using the following method: list F-base codes of all the numbers 0 to G-1, in which each code is a 2W-digit code; select one code randomly, insert H+1 X digits to be determined at the position of the (W+1)th digit in this code; take out W codes starting from the second digit of the code, skip H+1 codes, take out the last W-1 digits, select one code from the remaining codes, in which the first 2W-1 digits are the same as the 2W-1 digits taken previously, add the last digit of the code to the end of the obtained code; take out W codes starting from the third digit of the obtained code, skip H+1 digits, take out the last W-1 digits, and continue the above process till the F-base codes of all the numbers from 0 to G-1 are connected into one G-digit code string, and when the G-digit code is connected head to tail, each 2W-digit code separated by H+1 taken out is an F-base code of a different number from 0 to G-1.

When the number of sector-shaped conductive areas is greater than 2, the method for generating the code string is similar to the above, and is not described below.

A suitable code string cannot necessarily be found based on the positions of the disposed multiple sector-shaped conductive areas. Therefore, the calculation of the code string can be attempted according to different disposition solutions for the positions of the sector-shaped conductive areas, respectively, and then the disposition manner of the sector-shaped areas is determined according to the code string found. The above are only a few methods of obtaining a prior code, and according to different designs of sector-shaped conductive areas, the specific code will also be different and the method of obtaining the code will also be different. Several specific examples are given below to illustrate the process of generating the code.

An example in which each electric signal corresponds to two signal wires denoting 0 and 1, respectively, that is, the code string is a binary code string, and one sector is adopted is taken below to illustrate the method of obtaining the code string. If the length of the code string is M, that is, the total number of electrodes is M, the code string may be formed by connecting binary codes of the integers from 0 to M-1, so that when the M-digit binary code string is connected head to tail to form a ring, the continuous N-digit codes taken out from different positions are all binary codes of different integers from 0 to M-1, and.

In a simple example, when an 8-digit binary code string is required to code 8 electrodes, a 3-digit code may be used to determine the absolute angle of one electrode. When one sector-shaped conductive area is adopted, the 3-digit binary codes of the numbers 0 to 7 are first listed, that is, 000, 001, 010, 011, 100, 101, 110, and 111, and then the 8 codes are connected in a certain order. The order is, the first three digits of the next code are equal to the last three digits of the previous code, and when the 8-digit code is connected head to tail, each random continuous 3-digit code taken out is a different binary code, so as to obtain the following code: 00010111. Therefore, one corresponding code can be successively assigned to the successive M electrodes on the static plate based on the obtained M-digit binary code, that is, the electrodes sequentially arranged on the static plate correspond to the codes 0, 0, 0, 1, 0, 1, 1, and 1, respectively. According to the code of each electrode, the electrode is connected to a signal wire corresponding to the code excited by an electric signal with a corresponding phase. In the simple example above, every two electrodes is a group, and the first electrode in each group is connected to a signal wire 0, 0, 0, and 1 (corresponding to odd-numbered digits of the above 8-digit code) of the first phase signal, respectively, the second electrode in each group is connected to a signal wire 0, 1, 1, and 1 (corresponding to the even-numbered digits of the above 8-digit code) of the second phase signal, respectively. It can be seen that the M-digit code string has no head and tail, that is, the head and tail of the M-digit code are connected, and one M-digit code string can be obtained by breaking at a random code digit, for example, 10111000 can be obtained, or any M-digit code string formed in a clockwise or counterclockwise direction can be used in the embodiments of the present invention, for example, 11101000 can be used. The method of generating the code is also not limited to the method given above.

When the precision requirement of angle measurement is higher, the total number of electrodes required is larger.

The principles and several examples of the rotary encoder capable of measuring incremental and absolute rotation angles provided by the present invention are provided above, and a specific example is given below to illustrate the rotary encoder.

### Second Embodiment

FIG. 3 is a schematic view of a static plate of a capacitive rotary encoder according to a second embodiment of the present invention.

As shown in FIG. 3, 64 electrodes 301 arranged side by side with their longitudinal axes in radial direction with respect to the rotation axis of the rotation plate are disposed on the transmitting area to form one track. 8 signal wires A0, A1, B0, B1, C0, C1, D0, and D1 are disposed at another layer of the static plate, and are grouped into two groups: series 1 (A1, B1, C1, and D1) and series 0 (A0, B0, C0, and D0). It should be noted that in the embodiment of the present invention, the signal wires are circular, but in other embodiments, the signal wires may also have other shapes and forms. Each electrode 301 is connected to a corresponding signal wire through a via, respectively.

Every four successive electrodes A, B, C, and D form one space period, and are excited by quadrature four-phase (phase A, phase B, phase C, phase D) alternating current voltage sources, respectively. The excitation signal of each phase is connected to two signal wires, for example, the phase A excitation signal is connected to signal wires A0 and A1, and so on, respectively. The electrodes that are excited by electric signals with the same phase in each space period are referred to as in-phase electrodes. The electrode A in each period is connected to the series 0 (A0-D0) or series 1 (A1-D1) electric wire corresponding thereto. The code of one electrode is determined by whether the electrode is connected to a series 1 signal wire or connected to a series 0 signal wire. Therefore, the code of the electrode is represented by the electrical connection thereof.

The receiving areas, also referred to as pickup electrodes, are arranged into a radial circle form on the static plate, so as to form four concentric circles. The pickup electrodes 303 and 304 are conductive circles located at two sides of the transmitting area, respectively, and have the same surface area to obtain the same received signal amplitude. The pickup electrodes 302 and 305 are also conductive circles at the inner side and outer side of the static plate.

FIG. 4 is a schematic view of a rotation plate of a capacitive rotary encoder provided in the second embodiment of the present invention.

The reflecting areas 403 and 404 are a pair of conductive surfaces separated by an insulated area, and the insulated area is the portion depicted by black thick lines in the figure. Multiple bulges having a sine wave shape are provided at the edge where the reflecting areas 403 and 404 are adjacent, and these bulges have the same shape, are distributed at equal intervals, and are arranged in an alternating manner, that is, form a differential structure. The reflecting areas 403 and 404 reflect a pair of differential signals to the receivers 303 and 304 on the static plate for incremental angle measurement. The sector-shaped conductive areas 402 and 405 are electrically isolated from each other, one connected to the outer circle, and the other connected to the inner circle. The sector-shaped conductive areas 402 and 405 may overlap at least 3 and less than 5 electrodes at any mechanical angle. When the signal generation circuit generates a group of pulse signals to excite the signal wires successively, the corresponding receiving areas 302 and 305 on the static plate receive signals of the electrodes overlapped by the sector-shaped conductive areas 402 and 405.

The code string "0000000101100100101010000110001111 111010011001101101010111100111" is the codes corresponding to 64 electrodes on the track of the transmitting area, with no distinction between and head or tail. Table 1 shows 64 position indices defined using a 6-digit code.

**Table 1 Unique Position Indices of Positions of 64 Electrodes on Track of Transmitting Area**

| Code | Index | Code | Index | Code | Index | Code | Index |
|---|---|---|---|---|---|---|---|
| 000000 | 1 | 101100 | 17 | 111101 | 33 | 110010 | 49 |
| 000001 | 2 | 010000 | 18 | 111010 | 34 | 101101 | 50 |
| 000010 | 3 | 101000 | 19 | 111100 | 35 | 010011 | 51 |
| 000101 | 4 | 010001 | 20 | 110001 | 36 | 101111 | 52 |
| 000011 | 5 | 100011 | 21 | 101011 | 37 | 010111 | 53 |
| 001110 | 6 | 000110 | 22 | 010110 | 38 | 101110 | 54 |
| 010100 | 7 | 000100 | 23 | 100100 | 39 | 011100 | 55 |
| 101001 | 8 | 001000 | 24 | 001001 | 40 | 111001 | 56 |
| 011010 | 9 | 011001 | 25 | 011011 | 41 | 111011 | 57 |
| 110100 | 10 | 110011 | 26 | 110110 | 42 | 110111 | 58 |
| 100001 | 11 | 100111 | 27 | 100101 | 43 | 100110 | 59 |
| 001010 | 12 | 000111 | 28 | 001011 | 44 | 001100 | 60 |
| 010101 | 13 | 001111 | 29 | 011110 | 45 | 011000 | 61 |
| 100010 | 14 | 011111 | 30 | 110101 | 46 | 111000 | 62 |
| 001101 | 15 | 111111 | 31 | 101010 | 47 | 110000 | 63 |
| 010010 | 16 | 111110 | 32 | 011101 | 48 | 100000 | 64 |

As can be seen from Table 1, the number of digits of the position index is 6, and the code set can denote 2 ^ 6 = 64 unique positions. Every eight successive bits in the code string have 6 valid bits used to form the position index, denoting a mechanical position. The 6 valid bits can be obtained by discarding the first bit and taking out the last three successive bits from every four bits. For example, when two sector-shaped conductive areas are adopted, one receiver can obtain a continuous 8-digit code. As each sector is incompletely overlapped with the clockwise first electrode covered by the sector, the first and fifth digits in the obtained 8-digit code are invalid and are deleted.

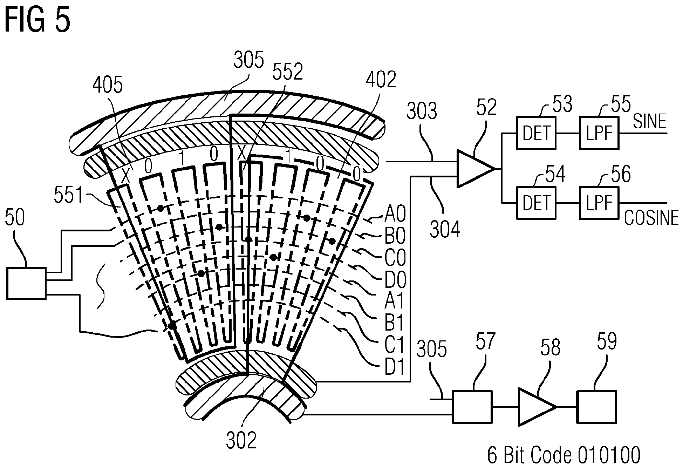

FIG. 5 shows the operating principles of a capacitive rotary encoder according to an embodiment of the present invention. As shown in FIG. 5, when the rotary encoder is in an incremental mode, four alternating current excitation signals that are phase shifted with respect to one another are loaded on the 8 signal wires A0 to D0 and A1 to D1 at the same time.

The electric phase differences of the alternating current excitation signals are 90 degrees. The reflecting areas 403 and 404 with complementary edges (as shown in FIG. 4) are disposed on the rotation plate and used for incremental angle detection. The reflecting areas 403 and 404 reflect the coupling capacitance to the receiver members 303 and 304 corresponding thereto on the static plate. The incremental angle sensing signal is amplified by the differential charge amplifier 52 and the common-mode noise in the received signal is eliminated. The output of the amplifier 52 is transferred to two identical channels to form a sine output and a cosine output, respectively. Each channel includes one synchronous detector 53, 54 and one low-pass filter 55, 56. The input of the synchronous detector 53 is an in-phase reference signal (namely, phase A) output by an excitation source 50, and the output thereof is filtered by one low-pass filter 55 to provide a sine signal. The input of the synchronous detector 54 is an orthogonal reference signal (namely, phase B) output by the excitation source 50, and the output thereof is filtered by one low-pass filter 56 to provide a cosine signal.

When the rotary encoder is in an absolute mode, the mode transition may be controlled with a control circuit. The absolute position of each electrode on the static plate is coded as one unique binary code, and each electrode is assigned with one code, which is represented as a different connection manner of the electrode. In this embodiment, the electrode being connected to a series 1 signal wire denotes "1" in the binary system, and the electrode being connected to a series 0 signal wire denotes "0" in the binary system. Therefore, the meaning of the electrode being connected to the series 0 signal wire or the series 1 signal wire is unique, and can be read out using an excitation-detection method. The electrodes are excited by the pulse voltages successively in a predetermined order. The predetermined order may be: all the signal wires are excited successively. The pickup circuit detects a recognition result, in which each response is aligned with a corresponding electrode through timestamp synchronization.

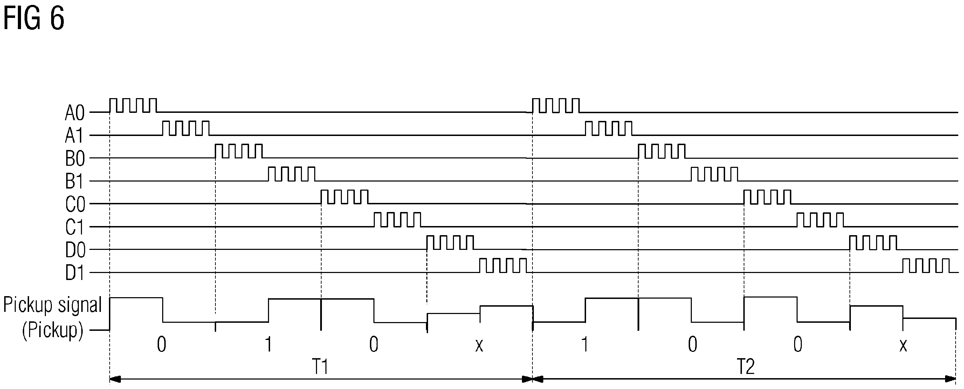

The rotation plate adopts two sector-shaped conductive areas 405 and 402 as reflectors for the absolute angle signals, and the sector-shaped conductive areas and the corresponding insulated area cover the two space periods of the transmitter. The sector-shaped conductive areas 405 and 402 on the rotation plate overlap with at least three electrodes at any mechanical angle, respectively, so that each receiving area 305 and 302 can read 3 valid digits at a time. The excitation source 50 generates a group of pulse signals, and under the successive control of the controller, loads the same in order to the eight excitation wires. FIG. 6 shows examples of an excitation pulse signal and a received signal according to an embodiment of the present invention.

The corresponding receiving areas 305 and 302 on the static plate receive coupling electric signals of the sector-shaped conductive areas 405 and 402 on the rotation plate. The received signals pass through the multiplexer 57 and are amplified by the charge amplifier 58. The received signal is rectified and filtered by a rectification circuit 59. The output signal of the rectification circuit 59 indicates one binary code string "X010X100". Further, by using the previously detected incremental angle information again, the controller determines the incompletely overlapped electrodes. As shown in the example in FIG. 5, as the sector-shaped conductive area 405 and the electrode 551 are incompletely overlapped, and the sector-shaped conductive area 402 and the electrode 552 are incompletely overlapped, the bits denoting the electrodes 151 and 152 are ignored. The original order of codes is adjusted to obtain an absolute position code "010100".

It should be noted that the sequence of the incremental mode and the absolute mode may be determined according to practical demands. For example, when connected to a power source, the rotary encoder may start the incremental mode first and then enter the absolute mode after the rotation plate stops rotation. Alternatively, the absolute mode may be started first to read the signals received by the sector-shaped conductive areas, and the incremental mode is then started. Finally, the measurement result of the incremental mode and the measurement result of the absolute mode need to be combined to obtain an absolute rotation angle of the rotation plate.

### Third Embodiment

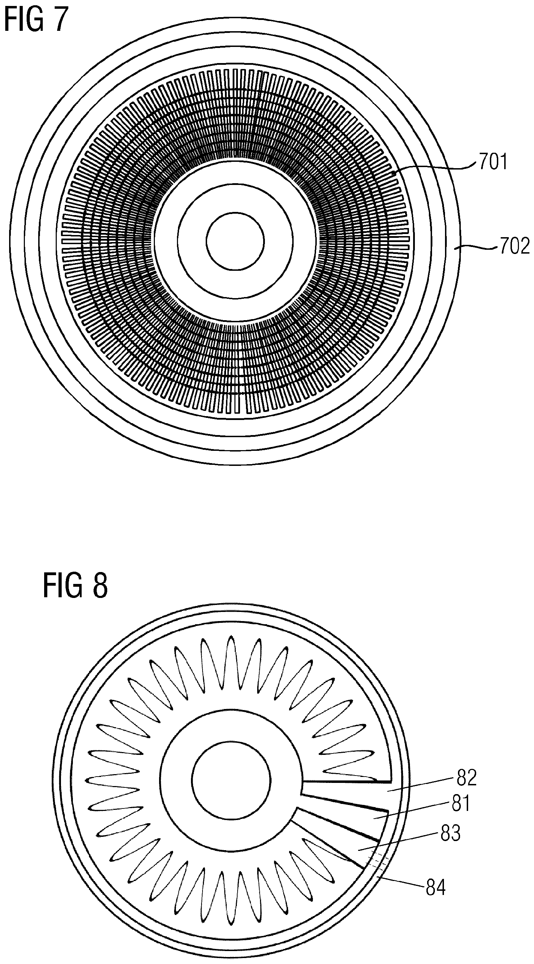

FIG. 7 is a schematic view of a static plate of a capacitive rotary encoder according to a third embodiment of the present invention.

FIG. 7 provides an implementation of a high-precision or large-diameter static plate. The number of electrodes 701 is 128, but the present invention is not limited to this number. The number of digits of a code detected in the absolute mode decides the maximum number of distinguishable unique positions in the absolute mode. To enhance the precision of the encoder or increase the diameter of the encoder, a larger number of digits is required. The number of digits in detected code is increased by increasing the number of sector-shaped conductive areas. Specifically, in the example above, each sector-shaped conductive area may provide a code with 3 valid digits, so that three sector-shaped conductive areas may provide a 9-digit valid code, that is, may distinguish 2 ^ 9 = 512 absolute positions. The circular conductive area 702 on the static plate is used to detect the code of an electrode coupled to the third sector-shaped conductive area.

FIG. 8 is a schematic view of a rotation plate of a capacitive rotary encoder provided in the third embodiment of the present invention.

FIG. 8 provides another implementation of a high-precision or a large-diameter rotation plate. As shown in the figure, the number of sector-shaped conductive areas is 3. However, the present invention is not limited to this number. The three sector-shaped conductive areas are: a sector-shaped conductive area 81 connected to an inner-circle reflecting area, a sector-shaped conductive area connected to a circular reflecting area 82, and a third sector-shaped conductive area 83 connected to a circular reflecting area 84 on the rotation plate. The sector-shaped conductive area 83 may be connected to the conductive substrate 84 through another layer of the rotation plate.

As can be seen from the above embodiments, in the capacitive rotary encoder according to the embodiments of the present invention, a differential structure is used to implement the incremental angle measurement, which has high measurement precision and a high price/performance ratio, and at the same time is rigid and durable.

According to the embodiments of the present invention, number coding can be performed on identical electrodes in a single track to sense an absolute position.

The present invention has a large-diameter measurement capability, which is implemented by configuring a differential structure and performing number coding on the absolute positions of the electrodes.

Correspondingly, an embodiment of the present invention further provides a method for sensing a rotation angle using a capacitive rotary encoder, which mainly includes the following steps:
exciting electrodes on a static plate at the same time using electric signals that are phase shifted with respect to one another, different electrodes in each group of electrodes being excited by electric signals that are phase shifted with respect to one another;
having a rotation plate rotate, driven by an object to be measured;
receiving a first electric signal and a second electric signal, the first electric signal being an electric signal reflected by a first reflecting area and sensed by a first receiving area, and the second electric signal being an electric signal reflected by a second reflecting area and sensed by a second receiving area;
performing differential amplification, synchronous demodulation, and low-pass filtering on the first electric signal and the second electric signal, respectively, and outputting one sine wave signal and one cosine wave signal;
calculating an angle that the rotation plate rotates relative to the static plate according to the sine wave signal and the cosine wave signal;
wherein the sine wave signal and the cosine wave signal are functions of the angle, respectively.

According to an embodiment of the present invention, when a rotary encoder with a sector-shaped conductive area is adopted to sense an absolute rotation angle, the specific steps are as follows:
when the rotation plate is still,
exciting U signal wires corresponding to electric signals with the same phase successively,
during each excitation, receiving an electric signal reflected by a corresponding sector-shaped conductive area sensed by each third receiving area, and obtaining U sensed values corresponding to every sector-shaped conductive area;
when the rotation plate rotates,
exciting all signal wires at the same time,
receiving a first electric signal reflected by a first reflecting area and sensed by a first receiving area and a second electric signal reflected by a second reflecting area and sensed by a second receiving area;
performing differential amplification, synchronous demodulation, and low-pass filtering on the first electric signal and the second electric signal, respectively, outputting one sine wave signal and one cosine wave signal, and calculating an angle that the rotation plate rotates relative to the static plate;
removing one sensed value from the U sensed values corresponding to each sector-shaped conductive area according to the calculated angle, calculating one code using the remaining sensed values, and determining the absolute position of the rotation plate relative to the static plate using the obtained code.

The absolute angle of the capacitive rotary encoder provided by the present invention is determined through an incremental angle and an absolute measurement result. Therefore, the processing mode includes an incremental mode and an absolute mode, and the processing mode may be controlled by one microprogram control unit.

In conclusion, the embodiments of the present invention have the following characteristics.

In one aspect, the encoder eliminates commonly encountered noise using a differential configuration. In an incremental mode, every four successive identical electrodes are excited by a four-phase quadrature alternating current voltage source (that is, phase A, phase B, phase C, and phase D). The receiver members used to detect an incremental angle are located at two sides of the transmitter electrode, so that the signal is reflected back from complementary conductive areas on the rotation plate. The output signal of an incremental receiver member is a function of a rotation angle of the rotation plate relative to the static plate, and differential amplification is performed on these output signals. Therefore, noise from stray electrostatic fields and electromagnetic fields is eliminated. Synchronous demodulation and low-pass filtering are performed on the output signal of the differential amplifier, so as to obtain the final two waves, namely, the sine wave and the cosine wave.

In another aspect, the number coding technology is used to perform the function of detecting an absolute position. In the absolute mode, each mechanical position of the static plate is coded using one unique multi-bit binary code.

First, the number of digits of a code used to denote each mechanical position decides the number of different unique absolute mechanical positions that can be recognized by the code system. The usable absolute position precision of an encoder is decided by the maximum number (= 2 ^ n) of codes. The required number of digits n can be calculated according to the desired precision and the diameter of the encoder. In a preferred embodiment of the present invention, the number of digits n is 6, and the group of order codes can denote 2 ^ 6 = 64 unique positions.

Secondly, to denote 1 bits and 0 bits of one code in a track, the excitation electric wires are grouped into two groups. The four wires at the outer side of the circle denote 0 bits, respectively, and the four wires at the inner side denote 1 bits. The electrodes are the same and the coding of 1 bits and 0 bits is implemented through electrical connections alone. Therefore, each electrode has two optional connecting wires: an electric wire denoting 0 or an electric wire denoting 1. Each electrode denotes 1 or 0 in the binary system, that is, special electric connections are adopted to indicate which binary code the electrode denotes. For example, an electrode connected to a wire at the outer side denotes 0, and an electrode connected to a wire at the inner side denotes 1.

Thirdly, the bit information related to the electrode is read and obtained using an excitation-detection method. The controller sequence excites series 0 and series 1 electric wires alternately from phase A to phase D. The electrode generates a voltage at reflecting areas spaced far apart on the rotation plate. The corresponding receiver on the static plate receives the voltage. Within a given time, every wire is excited, and the signals are compared and analyzed. Within this time, the connection of the electrode can be easily determined. In other words, the bit denoted by the electrode is read. Subsequently, according to the phase information detected in the incremental mode, valid bits are selected from the original code using a predetermined rule and the order of the bits is rearranged to form a unique absolute code, and finally the absolute code is converted into one absolute position.

The capacitive rotary encoder according to the embodiments of the present invention has the following characteristics.
[1] High accuracy and high precision: A differential configuration and a differential amplifier are used to eliminate noise caused by stray electrostatic fields and electromagnetic fields. Due to stray electrostatic fields and the electromagnetic field, the output signals of the receiver area all include a noise component. Specifically, the output of the receiver equals the signal S plus the noise I, that is, S+I. Due to the differential configuration, the signals received by another receiver are inverse to the first signal. Therefore, the output signal is -(S+I). By combining the output signals of the two differential amplifiers, the information signals are doubled in amplitude, and the noise is eliminated (S+I -(-S+I) = 2S).
[2] Simple structure: The absolute code of the mechanical position is implemented on a single track, that is, a railway-like circle formed by the electrodes, so as to save space and reduce the connection complexity. The implementation only requires the use of one double-plate structure, that is, the implementation requires only one static plate and one rotation plate, and the advantages are particularly apparent compared with multi-track coding. Therefore, the structure of the equipment is simpler. Through the number coding, a large-diameter encoder can be as simple in structure as a small-diameter encoder.
[3] Reliable readings: The number coding itself can achieve reliable readings. The connection of each electrode explicitly denotes 1 or 0 in the binary system. The method eliminates the ambiguity of analog detection, and is not sensitive to inclination of the equipment. Therefore, the contradiction between the quantization step size and the precision of an A/D converter is resolved.
[4] High price/performance ratio: The present invention solves the inherent problem of the high cost of the optical sensors and magnetic sensors. A low-cost conductive metal film such as a copper foil or an aluminum foil is used as a medium for signal transmission and reception. Therefore, the structure can be fabricated using the inexpensive, high price/performance ratio traditional printed circuit board (PCB) technology, and is suitable for mass production. In conclusion, the above descriptions are merely some of the embodiments of the present invention, but not intended to limit the present invention.

## Claims

1. A capacitive rotary encoder, comprising a static plate, a rotation plate, and an excitation source (50), the static plate comprising a transmitting area, a first receiving area (103, 303), and a second receiving area (102, 302), wherein the first receiving area (103, 303) and the second receiving area (102, 302) are conductive areas, respectively, the transmitting area, the first receiving area (103, 303), and the second receiving area (102, 302) are electrically isolated from each other, the transmitting area comprises multiple elongate electrodes (101, 301, 701) electrically isolated from each other, the electrodes (101, 301, 701) are arranged side by side with their longitudinal axes in radial direction with respect to the rotation axis of the rotation plate and every N successive electrodes (101, 301, 701) are assigned to one group, the excitation source (50) is adapted to generate periodic excitation electric signals and to apply these signals to the electrodes (101, 301, 701), wherein the excitation electric signals applied to different electrodes (101, 301, 701) in each group are phase shifted with respect to one another, and excitation electric signals applied to the Mth electrodes (101, 301, 701) in all the groups of electrodes (101, 301, 701) have the same phase, N being a natural number, and M being a positive integer not greater than N;
the rotation plate is capable of rotating about a rotation shaft and comprises an insulated area (200, 400), a first reflecting area (203, 403), and a second reflecting area (202, 404), the first reflecting area (203, 403) is located at a periphery of the second reflecting area (202, 404) and is concentric with the second reflecting area (202, 404), the first reflecting area (203, 403) and the second reflecting area (202, 404) are isolated by the insulated area (200, 400), multiple bulges towards the first reflecting area (203, 403) are provided at the edge of the second reflecting area (202, 404), multiple bulges towards the second reflecting area (202, 404) are provided at the edge of the first reflecting area (203, 403), and the multiple bulges of the first reflecting area (203, 403) and the multiple bulges of the second reflecting area (202, 404) are arranged in an alternating manner;
the first reflecting area (203, 403) and the second reflecting area (202, 404) are both conductive areas, the first reflecting area (203, 403) is capacitively coupled to the transmitting area and the first receiving area (103, 303), respectively, and the second reflecting area (202, 404) is capacitively coupled to the transmitting area and the second receiving area (102, 302), respectively;
the first receiving area (103, 303) in use receives an electric signal reflected by the first reflecting area (203, 403) and output the electric signal; and
the second receiving area (102, 302) in use receives an electric signal reflected by the second reflecting area (202, 404) and output the electric signal.

2. The rotary encoder according to claim 1, wherein the excitation electric signals of different electrodes (101, 301, 701) in each group are electric signals in mutual quadrature.

3. The rotary encoder according to claim 1, wherein the multiple bulges at the edge of the second reflecting area (202, 404) have the same shape and are distributed at equal intervals; the multiple bulges at the edge of the first reflecting area (203, 403) have the same shape and are distributed at equal intervals.

4. The rotary encoder according to claim 1, wherein the transmitting area, the first receiving area (103, 303), and the second receiving area (102, 302) are concentric circles, the first receiving area (103, 303) and the second receiving area (102, 302) are located at two sides of the transmitting area, respectively, and the first receiving area (103, 303) and the second receiving area (102, 302) have the same surface area.

5. The rotary encoder according to claim 3, wherein the electrodes (101, 301, 701) are bar shaped and are arranged at regular angular intervals, two long sides of each electrode (101, 301, 701) are in a radial direction, respectively; and a sector-shaped area covered by one bulge in the second reflecting area (202, 404) has the same angle as that of a sector-shaped area covered by a group of electrodes (101, 301, 701) in the transmitting area.

6. The rotary encoder according to claim 3, wherein the shapes of the bulges at the edges of both the first reflecting area (203, 403) and the second reflecting area (202, 404) are cosine wave shapes in polar coordinates.

7. The rotary encoder according to any one of claims 1 to 6, wherein the rotation plate further comprises at least one sector-shaped conductive area (402, 405, 81, 82, 83), the sector-shaped conductive areas (402, 405, 81, 82, 83) are electrically isolated from each other, and the sector-shaped conductive areas (402, 405, 81, 83) are electrically isolated from the first reflecting area (403) and the second reflecting area (404), respectively;
each different excitation electric signal is loaded on at least two signal wires (A0, B0, C0, D0, A1, B1, C1, D1), respectively, the at least two signal wires (A0, B0, C0, D0, A1, B1, C1, D1) representing different codes, respectively; each electrode (A, B, C, D) is connected to one of the at least two signal wires (A0, B0, C0, D0, A1, B1, C1, D1) corresponding to a corresponding excitation electric signal according to preset codes; and
the static plate further comprises at least one third receiving area electrically isolated from the transmitting area, the first receiving area (303), and the second receiving area (302), respectively, and each third receiving area is used to receive an electric signal reflected by a sector-shaped conductive area (402, 405, 81, 82, 83) and output the electric signal.

8. The rotary encoder according to claim 7, wherein the static plate is implemented as a printed circuit board; when the printed circuit board comprises at least two layers, the static plate is printed on one layer in the printed circuit board, and at least one signal wire (A0, B0, C0, D0, A1, B1, C1, D1) is printed on the other layer; and when the printed circuit board comprises one layer, the static plate is printed on one side of the printed circuit board, and at least one signal wire(A0, B0, C0, D0, A1, B1, C1, D1) is printed on the other side; and
the excitation electric signal is loaded on the signal wire (A0, B0, C0, D0, A1, B1, C1, D1), and the electrode (A, B, C, D) is connected to the corresponding signal wire (A0, B0, C0, D0, A1, B1, C1, D1) through a via.

9. The rotary encoder according to claim 1, wherein the rotary encoder further comprises a processing circuit, adapted to perform differential amplification, synchronous demodulation, and low-pass filtering on the signals output by the first receiving area (303) and the second receiving area (302), and output a sine wave signal and a cosine wave signal to calculate an angle that the rotation plate rotates relative to the static plate.

10. The rotary encoder according to claim 7, wherein the rotary encoder further comprises: a signal processing module, adapted to determine a code string according to the signals output by the first receiving area (303), the second receiving area (302), and the at least one third receiving area (305) to determine the position of the sector-shaped conductive area (402, 405, 81, 82, 83) relative to the static plate.

11. The rotary encoder according to claim 10, wherein the signal processing module is specifically adapted to: determine a code corresponding to each electrode coupled to each sector-shaped conductive area (402, 405, 81, 82, 83) according to the signal output by the at least one third receiving area; remove a code corresponding to an electrode incompletely coupled to the sector-shaped conductive area (402, 405, 81, 83) from the determined code of each third receiving area according to the signals output by the first receiving area (303) and the second receiving area (302); and connect the remaining codes into the code string.

12. The rotary encoder according to claim 7, wherein the rotary encoder further comprises:
a control unit, adapted to excite all signal wires (A0, B0, C0, D0, A1, B1, C1, D1) successively when the rotation plate is still; and excite all signal wires (A0, B0, C0, D0, A1, B1, C1, D1) at the same time when the rotation plate rotates.

13. The rotary encoder according to claim 7, wherein the at least one third receiving area, the transmitting area, the first receiving area (303), and the second receiving area (302) are concentric circles; the rotation plate further comprises at least one concentric circle conductive area (84), each concentric circle conductive area (84) being connected to a different sector-shaped conductive area (81, 82, 83); and the at least one third receiving area (305, 702) is capacitively coupled to a concentric circle conductive area ( 84) connected to a corresponding sector-shaped area (81, 82, 83).

14. The rotary encoder according to claim 7, wherein each different electric signal corresponds to two signal wires (A0, B0, C0, D0, A1, B1, C1, D1), respectively; when the total number of electrodes (301, 701) is P, P being a Qth power of 2, and 4 different electric signals are used, the number of sector-shaped conductive areas (402, 405, 81, 82, 83) is an integer rounded up from the quotient of Q divided by 3, and the number of digits of the code string is Q.

15. The rotary encoder according to claim 14, wherein the preset code is a binary code string of R digits and is generated according to binary codes of integers from 0 to R-1;
each different electric signal exciting at least two signal wires (A0, B0, C0, D0, A1, B1, C1, D1), respectively, the at least two signal wires (A0, B0, C0, D0, A1, B1, C1, D1) representing different codes, respectively, and each electrode (A, B, C, D) being connected to one of the at least two signal wires corresponding to the corresponding electric signal according to preset codes comprise that: 4 electric signals in mutual quadrature excite 8 signal wires, wherein two signal wires (A0, B0, C0, D0, A1, B1, C1, D1) connected to each electric signal denote 0 and 1, respectively; each electrode corresponds to a digit of code in the R-digit binary code string based on the arrangement order of the electrodes (A, B, C, D) on the static plate, and according to the code corresponding to each electrode (A, B, C, D), the electrode is connected to one of the two signal wires (A0, B0, C0, D0, A1, B1, C1, D1) connected to the electric signal corresponding to the electrode (A, B, C, D).

16. A method for sensing a rotation angle using the capacitive rotary encoder as claimed in claims 1 to 15, comprising:
Exciting the electrodes (101, 301, 701) on the static plate at the same time using electric signals that are phase shifted with respect to one another, wherein in each group of electrodes (101, 301, 701) different electrodes (101, 301, 701) are excited by electric signals of different phases; having the rotation plate rotate, driven by an object to be measured;
receiving a first electric signal and a second electric signal, the first electric signal being an electric signal reflected by the first reflecting area (203, 403) and sensed by the first receiving area (103, 303), and the second electric signal being an electric signal reflected by the second reflecting area (202, 404) and sensed by the second receiving area (102, 302) ;
performing differential amplification, synchronous demodulation, and low-pass filtering on the first electric signal and the second electric signal, respectively, and outputting a sine wave signal and a cosine wave signal; and
calculating an angle that the rotation plate rotates relative to the static plate according to the sine wave signal and the cosine wave signal;
wherein the sine wave signal and the cosine wave signal are functions of the angle, respectively.

17. A method for sensing a rotation angle using the capacitive rotary encoder as claimed in any one of claims 7-8 and 10-14, comprising:
when the rotation plate is still,
exciting U signal wires corresponding to electric signals having the same phase successively,
during each excitation, receiving an electric signal reflected by the corresponding sector-shaped conductive area (402, 405, 81, 82, 83) and sensed by each third receiving area (302, 305) to obtain U sensed values corresponding to each sector-shaped conductive area (402, 405, 81, 82, 83);
when the rotation plate rotates,
exciting all signal wires (A0, B0, C0, D0, A1, B1, C1, D1) at the same time,
receiving a first electric signal reflected by the first reflecting area (403) and sensed by the first receiving area (303) and a second electric signal reflected by the second reflecting area (404) and sensed by the second receiving area (304) ;
performing differential amplification, synchronous demodulation, and low-pass filtering on the first electric signal and the second electric signal, respectively, outputting a sine wave signal and a cosine wave signal, and calculating an angle that the rotation plate rotates relative to the static plate; and
removing one sensed value from U sensed values corresponding to each of the sector-shaped conductive areas (402, 405, 81, 82, 83) according to the calculated angle, calculating a code using the remaining sensed values, and determining an absolute position of the rotation plate relative to the static plate using the obtained code.

## Patentansprüche

1. Kapazitiver Drehgeber, der eine statische Scheibe, eine Drehscheibe und eine Anregungsquelle (50) umfasst, wobei die statische Scheibe einen Sendebereich, einen ersten Empfangsbereich (103, 303) und einen zweiten Empfangsbereich (102, 302) umfasst, wobei der erste Empfangsbereich (103, 303) und der zweite Empfangsbereich (102, 302) jeweils leitfähige Bereiche sind, wobei der Sendebereich, der erste Empfangsbereich (103, 303) und der zweite Empfangsbereich (102, 302) elektrisch voneinander isoliert sind, wobei der Sendebereich mehrere lang gestreckte Elektroden (101, 301, 701) umfasst, die elektrisch voneinander isoliert sind, wobei die Elektroden (101, 301, 701) mit ihren Längsachsen in radialer Richtung in Bezug auf die Drehachse der Drehscheibe nebeneinander angeordnet sind, und wobei jeweils N aufeinanderfolgende Elektroden (101, 301, 701) einer Gruppe zugewiesen werden, wobei die Anregungsquelle (50) geeignet ist zum Erzeugen von periodischen elektrischen Anregungssignalen und zum Anlegen dieser Signale an die Elektroden (101, 301, 701), wobei die elektrischen Anregungssignale, die an verschiedene Elektroden (101, 301, 701) in jeder Gruppe angelegt werden, in Bezug zueinander phasenverschoben sind, und wobei die elektrischen Anregungssignale, die an die M-ten Elektroden (101, 301, 701) in allen Gruppen von Elektroden (101, 301, 701) angelegt werden, die gleiche Phase aufweisen, wobei N eine natürliche Zahl ist, und M eine positive ganze Zahl nicht größer als N ist;
wobei die Drehscheibe in der Lage ist, sich um eine Drehwelle zu drehen, und einen isolierten Bereich (200, 400), einen ersten reflektierenden Bereich (203, 403) und einen zweiten reflektierenden Bereich (202, 404) umfasst, wobei der erste reflektierende Bereich (203, 403) an einer Peripherie des zweiten reflektierenden Bereichs (202, 404) angebracht ist und konzentrisch zu dem zweiten reflektierenden Bereich (202, 404) ist, wobei der erste reflektierende Bereich (203, 403) und der zweite reflektierende Bereich (202, 404) durch den isolierten Bereich (200, 400) isoliert sind, wobei mehrere Ausbuchtungen in Richtung auf den ersten reflektierenden Bereich (203, 403) an dem Rand des zweiten reflektierenden Bereichs (202, 404) bereitgestellt werden, wobei mehrere Ausbuchtungen in Richtung auf den zweiten reflektierenden Bereich (202, 404) an dem Rand des ersten reflektierenden Bereichs (203, 403) bereitgestellt werden, und wobei die mehreren Ausbuchtungen des ersten reflektierenden Bereichs (203, 403) und die mehreren Ausbuchtungen des zweiten reflektierenden Bereichs (202, 404) in einer alternierenden Weise angeordnet sind;
wobei sowohl der erste reflektierende Bereich (203, 403) als auch der zweite reflektierende Bereich (202, 404) leitfähige Bereiche sind, wobei der erste reflektierende Bereich (203, 403) mit dem Sendebereich bzw. dem ersten Empfangsbereich (103, 303) kapazitiv gekoppelt ist, und wobei der zweite reflektierende Bereich (202, 404) mit dem Sendebereich bzw. dem zweiten Empfangsbereich (102, 302) kapazitiv gekoppelt ist;
wobei der erste Empfangsbereich (103, 303) im Betrieb ein elektrisches Signal empfängt, das von dem ersten reflektierenden Bereich (203, 403) reflektiert wird, und das elektrische Signal ausgibt; und
wobei der zweite Empfangsbereich (102, 302) im Betrieb ein elektrisches Signal empfängt, das von dem zweiten reflektierenden Bereich (202, 404) reflektiert wird, und das elektrische Signal ausgibt.

2. Drehgeber nach Anspruch 1, wobei die elektrischen Anregungssignale von verschiedenen Elektroden (101, 301, 701) in jeder Gruppe elektrische Signale in einer gegenseitigen Quadratur sind.

3. Drehcodierer nach Anspruch 1, wobei die mehreren Ausbuchtungen am Rand des zweiten reflektierenden Bereichs (202, 404) die gleiche Form aufweisen und in gleichen Intervallen verteilt sind; wobei die mehreren Ausbuchtungen am Rand des ersten reflektierenden Bereichs (203, 403) die gleiche Form aufweisen und in gleichen Intervallen verteilt sind.

4. Drehcodierer nach Anspruch 1, wobei der Sendebereich, der erste Empfangsbereich (103, 303) und der zweite Empfangsbereich (102, 302) konzentrische Kreise sind, wobei der erste Empfangsbereich (103, 303) und der zweite Empfangsbereich (102, 302) jeweils auf zwei Seiten des Sendebereichs angebracht sind, und wobei der erste Empfangsbereich (103, 303) und der zweite Empfangsbereich (102, 302) den gleichen Oberflächenbereich aufweisen.

5. Drehgeber nach Anspruch 3, wobei die Elektroden (101, 301, 701) stabförmig sind und in regelmäßigen Winkelintervallen angeordnet sind, wobei zwei lange Seiten von jeder Elektrode (101, 301, 701) jeweils in eine radiale Richtung weisen; und wobei ein sektorförmiger Bereich, der von einer Ausbuchtung in dem zweiten reflektierenden Bereich (202, 404) abgedeckt wird, den gleichen Winkel aufweist wie ein sektorförmiger Bereich, der von einer Gruppe von Elektroden (101, 301, 701) in dem Sendebereich abgedeckt wird.

6. Drehgeber nach Anspruch 3, wobei die Formen der Ausbuchtungen an den Rändern sowohl des ersten reflektierenden Bereichs (203, 403) als auch des zweiten reflektierenden Bereichs (202, 404) Cosinus-Wellenformen in Polarkoordinaten sind.

7. Drehgeber nach einem der Ansprüche 1 bis 6, wobei die Drehscheibe außerdem umfasst: mindestens einen sektorförmigen leitfähigen Bereich (402, 405, 81, 82, 83), wobei die sektorförmigen leitfähigen Bereiche (402, 405, 81, 82, 83) elektrisch voneinander isoliert sind, und wobei die sektorförmigen leitfähigen Bereiche (402, 405, 81, 83) von dem ersten reflektierenden Bereich (403) bzw. dem zweiten reflektierenden Bereich (404) elektrisch isoliert sind;
jedes unterschiedliche elektrische Anregungssignal wird auf jeweils mindestens zwei Signaldrähte (A0, B0, C0, D0, A1, B1, C1, D1) geladen, wobei die mindestens zwei Signaldrähte (A0, B0, C0, D0, A1, B1, C1, D1) jeweils unterschiedliche Codes darstellen; wobei jede Elektrode (A, B, C, D) mit einem der mindestens zwei Signaldrähte (A0, B0, C0, D0, A1, B1, C1, D1) verbunden ist, die gemäß voreingestellten Codes einem entsprechenden elektrischen Anregungssignal entsprechen; und wobei die statische Scheibe außerdem mindestens einen dritten Empfangsbereich umfasst, der von dem Sendebereich, dem ersten Empfangsbereich (303) bzw. dem zweiten Empfangsbereich (302) elektrisch isoliert ist, und wobei jeder dritte Empfangsbereich verwendet wird, um ein elektrisches Signal zu empfangen, das von einem sektorförmigen leitfähigen Bereich (402, 405, 81, 82, 83) reflektiert wird, und um das elektrische Signal auszugeben.

8. Drehgeber nach Anspruch 7, wobei die statische Scheibe als eine gedruckte Leiterplatte umgesetzt wird; wobei, wenn die gedruckte Leiterplatte mindestens zwei Schichten umfasst, die statische Scheibe auf eine Schicht in der gedruckten Leiterplatte gedruckt wird, und wobei mindestens ein Signaldraht (A0, B0, C0, D0, A1, B1, C1, D1) auf die andere Schicht gedruckt wird; und wobei, wenn die gedruckte Leiterplatte eine Schicht umfasst, die statische Scheibe auf eine Seite der gedruckten Leiterplatte gedruckt wird, und der mindestens eine Signaldraht (A0, B0, C0, D0, A1, B1, C1, D1) auf die andere Seite gedruckt wird; und
wobei das elektrische Anregungssignal auf den Signaldraht (A0, B0, C0, D0, A1, B1, C1, D1) geladen wird, wobei die Elektrode (A, B, C, D) durch eine Durchkontaktierung mit dem entsprechenden Signaldraht (A0, B0, C0, D0, A1, B1, C1, D1) verbunden ist.

9. Drehgeber nach Anspruch 1, wobei die Drehscheibe außerdem einen Verarbeitungsschaltkreis umfasst, der geeignet ist zum Ausführen einer Differenzverstärkung, einer Synchrondemodulation und einer Tiefpassfilterung an den Signalen, die von dem ersten Empfangsbereich (303) und dem zweiten Empfangsbereich (302) ausgegeben werden, und zum Ausgeben eines Sinuswellensignals und eines Cosinuswellensignals, um einen Winkel zu berechnen, in dem sich die Drehscheibe relativ zur statischen Scheibe dreht.

10. Drehgeber nach Anspruch 7, wobei der Drehgeber außerdem ein Signalverarbeitungsmodul umfasst, das geeignet ist zum Ermitteln einer Codezeichenfolge gemäß den Signalen, die von dem ersten Empfangsbereich (303), dem zweiten Empfangsbereich (302) und dem mindestens einen dritten Empfangsbereich (305) ausgegeben werden, um die Position des sektorförmigen leitfähigen Bereichs (402, 405, 81, 82, 83) relativ zur statischen Scheibe zu ermitteln.

11. Drehgeber nach Anspruch 10, wobei das Signalverarbeitungsmodul insbesondere geeignet ist zum Ermitteln eines Codes, der jeder Elektrode entspricht, die mit jedem der sektorförmigen leitfähigen Bereiche (402, 405, 81, 82, 83) gekoppelt ist, gemäß dem Signal, das von dem mindestens einen dritten Empfangsbereich ausgegeben wird; zum Entfernen eines Codes, der einer Elektrode entspricht, die unvollständig mit dem sektorförmigen leitfähigen Bereich (402, 405, 81, 83) gekoppelt ist, aus dem ermittelten Code von jedem dritten Empfangsbereich gemäß den Signalen, die von dem ersten Empfangsbereich (303) und dem zweiten Empfangsbereich (302) ausgegeben werden; und zum Einbinden der verbleibenden Codes in die Codezeichenfolge.

12. Drehgeber nach Anspruch 7, wobei der Drehgeber außerdem umfasst:
eine Steuereinheit, die geeignet ist zum aufeinanderfolgenden Anregen aller Signaldrähte (A0, B0, C0, D0, A1, B1, C1, D1), wenn die Drehscheibe still steht; und zum gleichzeitigen Anregen aller Signaldrähte (A0, B0, C0, D0, A1, B1, C1, D1), wenn sich die Drehscheibe dreht.

13. Drehgeber nach Anspruch 7, wobei der mindestens eine dritte Empfangsbereich, der Sendebereich, der erste Empfangsbereich (303) und der zweite Empfangsbereich (302) konzentrische Kreise sind; wobei die Drehscheibe außerdem mindestens einen konzentrischen kreisförmigen leitfähigen Bereich (84) umfasst, wobei jeder konzentrische kreisförmige leitfähige Bereich (84) mit einem anderen sektorförmigen leitfähigen Bereich (81, 82, 83) verbunden ist; und wobei der mindestens eine dritte Empfangsbereich (305, 702) mit einem konzentrischen kreisförmigen leitfähigen Bereich (84) kapazitiv gekoppelt ist, der mit einem entsprechenden sektorförmigen Bereich (81, 82, 83) verbunden ist.

14. Drehgeber nach Anspruch 7, wobei jedes unterschiedliche elektrische Signal jeweils zwei Signaldrähten (A0, B0, C0, D0, A1, B1, C1, D1) entspricht; wobei, wenn die Gesamtanzahl an Elektroden (301, 701) P ist, P eine Q-te Potenz von 2 ist und 4 unterschiedliche elektrische Signale verwendet werden, die Anzahl von sektorförmigen leitfähigen Bereichen (402, 405, 81, 82, 83) eine ganze Zahl ist, die aus dem Quotienten von Q dividiert durch 3 aufgerundet wurde, und wobei die Anzahl von Stellen der Codezeichenfolge Q ist.

15. Drehgeber nach Anspruch 14, wobei der voreingestellte Code eine binäre Codezeichenfolge von R Stellen ist und gemäß den Binärcodes der ganzen Zahlen von 0 bis R - 1 erzeugt wird; wobei jedes unterschiedliche elektrische Signal jeweils mindestens zwei Signaldrähte (A0, B0, C0, D0, A1, B1, C1, D1) anregt, wobei die mindestens zwei Signaldrähte (A0, B0, C0, D0, A1, B1, C1, D1) jeweils unterschiedliche Codes darstellen, und wobei jede Elektrode (A, B, C, D) mit einem der mindestens zwei Signaldrähte verbunden ist, die gemäß den voreingestellten Codes einem entsprechenden elektrischen Signal entsprechen, umfassen dass: 4 elektrische Signale in einer gegenseitigen Quadratur 8 Signaldrähte anregen, wobei zwei Signaldrähte (A0, B0, C0, D0, A1, B1, C1, D1), die mit jedem elektrischen Signal verbunden sind, 0 bzw. 1 anzeigen; wobei jede Elektrode aufgrund der Anordnungsreihenfolge der Elektroden (A, B, C, D) auf der statischen Scheibe und gemäß dem Code, der jeder Elektrode (A, B, C, D) entspricht, einer Stelle eines Codes in der R-stelligen Binärcodezeichenfolge entspricht, wobei die Elektrode mit einem der zwei Signaldrähte (A0, B0, C0, D0, A1, B1, C1, D1) verbunden ist, die mit dem elektrischen Signal verbunden sind, das der Elektrode (A, B, C, D) entspricht.

16. Verfahren zum Erfassen eines Drehwinkels mithilfe eines kapazitiven Drehgebers nach einem der Ansprüche 1 bis 15, umfassend:
Anregen der Elektroden (101, 301, 701) auf der statischen Scheibe und gleichzeitig Verwenden von elektrischen Signalen, die untereinander phasenverschoben sind, wobei in jeder Gruppe von Elektroden (101, 301, 701) unterschiedliche Elektroden (101, 301, 701) durch die elektrischen Signale mit verschiedenen Phasen angeregt werden;
Drehen der Drehscheibe, die durch ein zu messendes Objekt angetrieben wird;
Empfangen eines ersten elektrischen Signals und eines zweiten elektrischen Signals, wobei das erste elektrische Signal ein elektrisches Signal ist, das von dem ersten reflektierenden Bereich (203, 403) reflektiert wird und von dem ersten Empfangsbereich (103, 303) erfasst wird, und wobei das zweite elektrische Signal ein elektrisches Signal ist, das von dem zweiten reflektierenden Bereich (202, 404) reflektiert wird und von dem zweiten Empfangsbereich (102, 302) erfasst wird;
Ausführen einer Differenzverstärkung, einer Synchrondemodulation und einer Tiefpassfilterung an dem ersten elektrischen Signal bzw. an dem zweiten elektrischen Signal, und Ausgeben eines Sinuswellensignals und eines Cosinuswellensignals; und
Berechnen eines Winkels, um den sich die Drehscheibe relativ zur statischen Scheibe gemäß dem Sinuswellensignal und dem Cosinuswellensignal dreht;
wobei das Sinuswellensignal und das Cosinuswellensignal jeweils Funktionen des Winkels sind.

17. Verfahren zum Erfassen eines Drehwinkels mithilfe eines kapazitiven Drehgebers nach einem der Ansprüche 7 bis 8 und 10 bis 14, umfassend:
wenn die Drehscheibe stillsteht,
Anregen von U Signaldrähten, die elektrischen Signalen entsprechen, die nacheinander die gleiche Phase aufweisen,
während jeder Anregung, Empfangen eines elektrischen Signals, das von dem entsprechenden sektorförmigen leitfähigen Bereich (402, 405, 81, 82, 83) reflektiert wird und von jedem dritten Empfangsbereich (302, 305) erfasst wird, um die U erfassten Werte zu erhalten, die jedem sektorförmigen leitfähigen Bereich (402, 405, 81, 82, 83) entsprechen;
wenn sich die Drehscheibe dreht,
gleichzeitiges Anregen aller Signaldrähte (A0, B0, C0, D0, A1, B1, C1, D1),
Empfangen eines ersten elektrischen Signals, das von dem ersten reflektierenden Bereich (403) reflektiert wird und von dem ersten Empfangsbereich (303) erfasst wird, und eines zweiten elektrischen Signals ist, das von dem zweiten reflektierenden Bereich (404) reflektiert wird und von dem zweiten Empfangsbereich (304) erfasst wird;
Ausführen einer Differenzverstärkung, einer Synchrondemodulation und einer Tiefpassfilterung an dem ersten elektrischen Signal bzw. an dem zweiten elektrischen Signal, und Ausgeben eines Sinuswellensignals und eines Cosinuswellensignals, und Berechnen eines Winkels, um den sich die Drehscheibe relativ zu der statischen Scheibe dreht; und
Entfernen eines erfassten Werts aus den U erfassten Werten, die jedem der sektorförmigen leitfähigen Bereiche (402, 405, 81, 82, 83) gemäß dem berechneten Winkel entsprechen, Berechnen eines Codes mithilfe der verbleibenden erfassten Werte und Ermitteln einer absoluten Position der Drehscheibe relativ zur statischen Scheibe mithilfe des erhaltenen Codes.

## Revendications

1. Codeur rotatif capacitif, comprenant une plaque statique, une plaque de rotation, et une source d'excitation (50), la plaque statique comprenant une zone d'émission, une première zone de réception (103, 303), et une deuxième zone de réception (102, 302), dans lequel la première zone de réception (103, 303) et la deuxième zone de réception (102, 302) sont des zones conductrices, respectivement, la zone d'émission, la première zone de réception (103, 303) et la deuxième zone de réception (102, 302) sont isolées électriquement les unes des autres, la zone d'émission comprend de multiples électrodes allongées (101, 301, 701) isolées électriquement les unes des autres, les électrodes (101, 301, 701) sont disposées côte à côte avec leurs axes longitudinaux dans une direction radiale par rapport à l'axe de rotation de la plaque de rotation et toutes les N électrodes successives (101, 301, 701) sont affectées à un groupe, la source d'excitation (50) est adaptée pour générer des signaux électriques d'excitation périodiques et pour appliquer ces signaux aux électrodes (101, 301, 701), dans lequel les signaux électriques d'excitation appliqués à différentes électrodes (101, 301, 701) dans chaque groupe sont déphasés les uns par rapport aux autres, et les signaux électriques d'excitation appliqués aux M^{ièmes} électrodes (101, 301, 701) dans tous les groupes d'électrodes (101, 301, 701) ont la même phase, N étant un entier naturel, et M étant un entier positif inférieur ou égal à N ;
la plaque de rotation peut tourner autour d'un axe de rotation et comprend une zone isolée (200, 400), une première zone de réflexion (203, 403), et une deuxième zone de réflexion (202, 404), la première zone de réflexion (203, 403) est située à une périphérie de la deuxième zone de réflexion (202, 404) et est concentrique avec la deuxième zone de réflexion (202, 404), la première zone de réflexion (203, 403) et la deuxième zone de réflexion (202, 404) sont isolées par la zone isolée (200, 400), de multiples renflements vers la première zone de réflexion (203, 403) sont disposés au bord de la deuxième zone de réflexion (202, 404), de multiples renflements vers la deuxième zone de réflexion (202, 404) sont disposés au bord de la première zone de réflexion (203, 403), et les multiples renflements de la première zone de réflexion (203, 403) et les multiples renflements de la deuxième zone de réflexion (202, 404) sont disposés d'une manière alternée ;
la première zone de réflexion (203, 403) et la deuxième zone de réflexion (202, 404) sont toutes deux des zones conductrices, la première zone de réflexion (203, 403) est couplée de façon capacitive à la zone d'émission et la première zone de réception (103, 303), respectivement, et la deuxième zone de réflexion (202, 404) est couplée de façon capacitive à la zone d'émission et la deuxième zone de réception (102, 302), respectivement ;
la première zone de réception (103, 303) reçoit à l'usage un signal électrique réfléchi par la première zone de réflexion (203, 403) et délivre le signal électrique ; et
la deuxième zone de réception (102, 302) reçoit à l'usage un signal électrique réfléchi par la deuxième zone de réflexion (202, 404) et délivre le signal électrique.

2. Codeur rotatif selon la revendication 1, dans lequel les signaux électriques d'excitation de différentes électrodes (101, 301, 701) dans chaque groupe sont des signaux électriques en quadrature mutuelle.

3. Codeur rotatif selon la revendication 1, dans lequel les multiples renflements au bord de la deuxième zone de réflexion (202, 404) ont la même forme et sont distribués à intervalles égaux ; les multiples renflements au bord de la première zone de réflexion (203, 403) ont la même forme et sont distribués à intervalles égaux.

4. Codeur rotatif selon la revendication 1, dans lequel la zone d'émission, la première zone de réception (103, 303) et la deuxième zone de réception (102, 302) sont des cercles concentriques, la première zone de réception (103, 303) et la deuxième zone de réception (102, 302) sont situées sur deux côtés de la zone d'émission, respectivement, et la première zone de réception (103, 303) et la deuxième zone de réception (102, 302) ont la même surface.

5. Codeur rotatif selon la revendication 3, dans lequel les électrodes (101, 301, 701) sont en forme de barre et sont disposées à intervalles angulaires réguliers, deux longs côtés de chaque électrode (101, 301, 701) sont dans une direction radiale, respectivement ; et une zone en forme de secteur couverte par un renflement dans la deuxième zone de réflexion (202, 404) a le même angle que celui d'une zone en forme de secteur couverte par un groupe d'électrodes (101, 301, 701) dans la zone d'émission.

6. Codeur rotatif selon la revendication 3, dans lequel les formes des renflements aux bords à la fois de la première zone de réflexion (203, 403) et de la deuxième zone de réflexion (202, 404) sont des formes d'ondes cosinusoïdales en coordonnées polaires.

7. Codeur rotatif selon l'une quelconque des revendications 1 à 6, dans lequel la plaque de rotation comprend en outre au moins une zone conductrice en forme de secteur (402, 405, 81, 82, 83), les zones conductrices en forme de secteur (402, 405, 81, 82, 83) sont isolées électriquement les unes des autres, et les zones conductrices en forme de secteur (402, 405, 81, 83) sont isolées électriquement de la première zone de réflexion (403) et de la deuxième zone de réflexion (404), respectivement ;
chaque signal électrique d'excitation différent est chargé sur au moins deux fils de transmission du signal (A0, B0, C0, D0, A1, B1, C1, D1), respectivement, les au moins deux fils de transmission du signal (A0, B0, C0, D0, A1, B1, C1, D1) représentant différents codes, respectivement ;
chaque électrode (A, B, C, D) est reliée à un des au moins deux fils de transmission du signal (A0, B0, C0, D0, A1, B1, C1, D1) correspondant à un signal électrique d'excitation correspondant en fonction de codes prédéfinis ; et
la plaque statique comprend en outre au moins une troisième zone de réception isolée électriquement de la zone d'émission, de la première zone de réception (303) et de la deuxième zone de réception (302), respectivement, et chaque troisième zone de réception est utilisée pour recevoir un signal électrique réfléchi par une zone conductrice en forme de secteur (402, 405, 81, 82, 83) et délivrer le signal électrique.

8. Codeur rotatif selon la revendication 7, dans lequel la plaque statique est mise en oeuvre sous la forme d'une carte de circuit imprimé ; quand la carte de circuit imprimé comprend au moins deux couches, la plaque statique est imprimée sur une couche dans la carte de circuit imprimé, et au moins un fil de transmission du signal (A0, B0, C0, D0, A1, B1, C1, D1) est imprimé sur l'autre couche ; et quand la carte de circuit imprimé comprend une couche, la plaque statique est imprimée sur un côté de la carte de circuit imprimé, et au moins un fil de transmission du signal (A0, B0, C0, D0, A1, B1, C1, D1) est imprimé sur l'autre côté ; et
le signal électrique d'excitation est chargé sur le fil de transmission du signal (A0, B0, C0, D0, A1, B1, C1, D1), et l'électrode (A, B, C, D) est reliée au fil de transmission du signal correspondant (A0, B0, C0, D0, A1, B1, C1, D1) par un trou d'interconnexion.

9. Codeur rotatif selon la revendication 1, le codeur rotatif comprenant en outre un circuit de traitement, adapté pour effectuer une amplification différentielle, une démodulation synchrone et un filtrage passe-bas sur les signaux délivrés par la première zone de réception (303) et la deuxième zone de réception (302), et délivrer un signal d'onde sinusoïdale et un signal d'onde cosinusoïdale pour calculer un angle duquel la plaque de rotation tourne par rapport à la plaque statique.

10. Codeur rotatif selon la revendication 7, le codeur rotatif comprenant en outre : un module de traitement du signal, adapté pour déterminer une chaîne de codes en fonction des signaux délivrés par la première zone de réception (303), la deuxième zone de réception (302) et l'au moins une troisième zone de réception (305) pour déterminer la position de la zone conductrice en forme de secteur (402, 405, 81, 82, 83) par rapport à la plaque statique.

11. Codeur rotatif selon la revendication 10, dans lequel le module de traitement du signal est spécifiquement adapté pour : déterminer un code correspondant à chaque électrode couplée à chaque zone conductrice en forme de secteur (402, 405, 81, 82, 83) en fonction du signal délivré par l'au moins une troisième zone de réception ; retirer un code correspondant à une électrode incomplètement couplée à la zone conductrice en forme de secteur (402, 405, 81, 83) du code déterminé de chaque troisième zone de réception en fonction des signaux délivrés par la première zone de réception (303) et la deuxième zone de réception (302) ; et relier les codes restants dans la chaîne de codes.

12. Codeur rotatif selon la revendication 7, le codeur rotatif comprenant en outre :
une unité de commande, adaptée pour exciter tous les fils de transmission du signal (A0, B0, C0, D0, A1, B1, C1, D1) successivement quand la plaque de rotation est au repos ; et exciter tous les fils de transmission du signal (A0, B0, C0, D0, A1, B1, C1, D1) en même temps quand la plaque de rotation tourne.

13. Codeur rotatif selon la revendication 7, dans lequel l'au moins une troisième zone de réception, la zone d'émission, la première zone de réception (303) et la deuxième zone de réception (302) sont des cercles concentriques ; la plaque de rotation comprend en outre au moins une zone conductrice en cercle concentrique (84), chaque zone conductrice en cercle concentrique (84) étant reliée à une zone conductrice en forme de secteur différente (81, 82, 83) ; et l'au moins une troisième zone de réception (305, 702) est couplée de façon capacitive à une zone conductrice en cercle concentrique (84) reliée à une zone en forme de secteur correspondante (81, 82, 83) .

14. Codeur rotatif selon la revendication 7, dans lequel chaque signal électrique différent correspond à deux fils de transmission du signal (A0, B0, C0, D0, A1, B1, C1, D1), respectivement ; quand le nombre total d'électrodes (301, 701) est P, P étant une Q^{ième} puissance de 2, et 4 signaux électriques différents sont utilisés, le nombre de zones conductrices en forme de secteur (402, 405, 81, 82, 83) est un entier arrondi par excès à partir du quotient de Q divisé par 3, et le nombre de chiffres de la chaîne de codes est Q.

15. Codeur rotatif selon la revendication 14, dans lequel le code prédéfini est une chaîne de codes binaires de R chiffres et est généré en fonction de codes binaires d'entiers de 0 à R-1 ; le fait que chaque signal électrique différent excite au moins deux fils de transmission du signal (A0, B0, C0, D0, A1, B1, C1, D1), respectivement, que les au moins deux fils de transmission du signal (A0, B0, C0, D0, A1, B1, C1, D1) représentent différents codes, respectivement, et que chaque électrode (A, B, C, D) soit reliée à un des au moins deux fils de transmission du signal correspondant au signal électrique correspondant en fonction de codes prédéfinis comprend le fait que : 4 signaux électriques en quadrature mutuelle excitent 8 fils de transmission du signal, deux fils de transmission du signal (A0, B0, C0, D0, A1, B1, C1, D1) reliés à chaque signal électrique désignant 0 et 1, respectivement ; chaque électrode correspond à un chiffre de code dans la chaîne de codes binaires à R chiffres sur la base de l'ordre d'agencement des électrodes (A, B, C, D) sur la plaque statique, et en fonction du code correspondant à chaque électrode (A, B, C, D), l'électrode est reliée à un des deux fils de transmission du signal (A0, B0, C0, D0, A1, B1, C1, D1) relié au signal électrique correspondant à l'électrode (A, B, C, D).

16. Procédé destiné à détecter un angle de rotation en utilisant le codeur rotatif capacitif selon les revendications 1 à 15, comprenant les étapes suivantes :
exciter les électrodes (101, 301, 701) sur la plaque statique en même temps en utilisant des signaux électriques qui sont déphasés les uns par rapport aux autres, dans lequel, dans chaque groupe d'électrodes (101, 301, 701), différentes électrodes (101, 301, 701) sont excitées par des signaux électriques de différentes phases ;
faire en sorte que la plaque de rotation tourne, entraînée par un objet devant être mesuré ;
recevoir un premier signal électrique et un deuxième signal électrique, le premier signal électrique étant un signal électrique réfléchi par la première zone de réflexion (203, 403) et détecté par la première zone de réception (103, 303), et le deuxième signal électrique étant un signal électrique réfléchi par la deuxième zone de réflexion (202, 404) et détecté par la deuxième zone de réception (102, 302) ;
effectuer une amplification différentielle, une démodulation synchrone et un filtrage passe-bas sur le premier signal électrique et le deuxième signal électrique, respectivement, et délivrer un signal d'onde sinusoïdale et un signal d'onde cosinusoïdale ; et
calculer un angle duquel la plaque de rotation tourne par rapport à la plaque statique en fonction du signal d'onde sinusoïdale et du signal d'onde cosinusoïdale ;
dans lequel le signal d'onde sinusoïdale et le signal d'onde cosinusoïdale sont des fonctions de l'angle, respectivement.

17. Procédé destiné à détecter un angle de rotation en utilisant le codeur rotatif capacitif selon l'une quelconque des revendications 7 et 8 et 10 à 14, comprenant les étapes suivantes :
quand la plaque de rotation est au repos,
exciter des fils de transmission du signal de U correspondant à des signaux électriques ayant la même phase successivement,
pendant chaque excitation, recevoir un signal électrique réfléchi par la zone conductrice en forme de secteur correspondante (402, 405, 81, 82, 83) et détecté par chaque troisième zone de réception (302, 305) pour obtenir des valeurs détectées de U correspondant à chaque zone conductrice en forme de secteur (402, 405, 81, 82, 83) ;
quand la plaque de rotation tourne,
exciter tous les fils de transmission du signal (A0, B0, C0, D0, A1, B1, C1, D1) en même temps,
recevoir un premier signal électrique réfléchi par la première zone de réflexion (403) et détecté par la première zone de réception (303) et un deuxième signal électrique réfléchi par la deuxième zone de réflexion (404) et détecté par la deuxième zone de réception (304) ;
effectuer une amplification différentielle, une démodulation synchrone et un filtrage passe-bas sur le premier signal électrique et le deuxième signal électrique, respectivement, délivrer un signal d'onde sinusoïdale et un signal d'onde cosinusoïdale, et calculer un angle duquel la plaque de rotation tourne par rapport à la plaque statique ; et
retirer une valeur détectée de valeurs détectées de U correspondant à chacune des zones conductrices en forme de secteur (402, 405, 81, 82, 83) en fonction de l'angle calculé, calculer un code en utilisant les valeurs détectées restantes, et déterminer une position absolue de la plaque de rotation par rapport à la plaque statique en utilisant le code obtenu.
